# EUROPEAN PATENT APPLICATION

(11) **EP 4 792 993 A1**
(43) Date of publication of application: **19.08.2026**
(21) Application number: 24927494.5
(22) Date of filing: 27.12.2024
(51) Int. Cl.: B25J 9/00, B25J 9/16, B25J 13/08, A61H 3/00

(54) **WEARABLE DEVICE PROVIDING TORQUE FOR PERIODIC MOVEMENT OF USER AND METHOD OF OPERATING SAME**

(30) Priority: 28.02.2024 KR 20240029013; 21.06.2024 KR 20240081060
(71) Applicant: Samsung Electronics Co., Ltd., Suwon-si, Gyeonggi-do 16677 (KR)
(72) Inventor: YU, Jungpil, Suwon-si, Gyeonggi-do 16677 (KR); SONG, Sukhoon, Suwon-si, Gyeonggi-do 16677 (KR)
(74) Representative: Gulde & Partner
(86) International application number: PCT/KR2024/021204
(87) International publication number: WO 2025/183322

(57) **Abstract**

A wearable exercise device may: obtain a left hip joint angle and a right hip joint angle of a user by using at least one angle sensor; process the left hip joint angle and the right hip joint angle to correct DC components of the left hip joint angle and the right hip joint angle; determine a first torque value on the basis of the processed left hip joint angle; determine a second torque value on the basis of the processed right hip joint angle; determine, on the basis of movement information of the user, one of the first torque value and the second torque value as a target torque value; and control a driving module such that torque based on the determined target torque value is output by the driving module.

## Description

### BACKGROUND

### 1. Field

Certain example embodiments relate to a wearable device for providing a torque for a periodic movement of a user and/or a method of operating the wearable device.

### 2. Description of Related Art

An assistance device may refer to a device or apparatus that helps a user perform an exercise or movement. The assistance device may be worn on the body of the user and may provide the user with power to perform an exercise or movement.

### SUMMARY

According to an example embodiment, provided is a wearable device for outputting a torque appropriate for an exercise (e.g., repetitive movement) of a user through a hip joint angle with a direct current (DC) component corrected.

According to an example embodiment, a wearable device may include a driving module, comprising a motor and/or drive circuitry, configured to output a torque, at least one angle sensor, and a processor, comprising processing circuitry, configured to: obtain a left hip joint angle and a right hip joint angle of a user using the angle sensor, process the left hip joint angle and the right hip joint angle to correct a DC component of each of the left hip joint angle and the right hip joint angle, determine a first torque value based on the processed left hip joint angle, determine a second torque value based on the processed right hip joint angle, determine at least one of the first torque value and the second torque value as a target torque value based on movement information of the user, and control the driving module such that a torque based on the determined target torque value is output by the driving module.

According to an example embodiment, a method of operating a wearable device may include obtaining a left hip joint angle and a right hip joint angle of a user using an angle sensor, processing the left hip joint angle and the right hip joint angle to correct a DC component of each of the left hip joint angle and the right hip joint angle, determining a first torque value based on the processed left hip joint angle, determining a second torque value based on the processed right hip joint angle, determining one of the first torque value and the second torque value as a target torque value, based on movement information of the user, and outputting a torque based on the determined target torque value.

### BRIEF DESCRIPTION OF THE DRAWINGS

The above and other aspects, features, and advantages of certain example embodiments of the present disclosure will be more apparent from the following detailed description, taken in conjunction with the accompanying drawings, in which:
FIG. 1A is a diagram illustrating an overview of a wearable device worn on a body of a user, according to an example embodiment;
FIG. 1B is a diagram illustrating an example of a system including a wearable device, according to an example embodiment;
FIG. 2A is a rear schematic view of a wearable device according to an example embodiment;
FIG. 2B is a left side view of a wearable device according to an example embodiment;
FIGS. 3A and 3B are block diagrams illustrating examples of a configuration of a wearable device, according to an example embodiment;
FIG. 4 is a diagram illustrating an interaction between a wearable device and an electronic device, according to an example embodiment;
FIG. 5 is a diagram illustrating an example of an operation of a wearable device, according to an example embodiment;
FIG. 6 is a block diagram illustrating an example of a configuration of a wearable device, according to an example embodiment;
FIG. 7 is a block diagram schematically illustrating an operation of a wearable device, according to an example embodiment;
FIGS. 8, 9, 10, and 11 are diagrams illustrating examples in which a wearable device corrects a direct current (DC) component of a hip joint angle of a user, according to an example embodiment;
FIG. 12 is a diagram illustrating an example in which a wearable device performs a time delay, according to an example embodiment;
FIGS. 13, 14, 15, 16, and 17 are diagrams illustrating examples in which a wearable device determines a torque value, according to an example embodiment;
FIGS. 18, 19, 20, 21, 22, 23, and 24 are diagrams illustrating examples of an operation of a wearable device for a user performing a knee-up exercise, according to an example embodiment;
FIG. 25 is a diagram illustrating an example of an operation of a wearable device for a user performing a leg swing exercise, according to an example embodiment;
FIG. 26 is a diagram illustrating an example of an operation of a wearable device for a user performing a squat exercise, according to an example embodiment;
FIG. 27 is a block diagram illustrating another example of an operation of a wearable device, according to an example embodiment;
FIG. 28 is a block diagram illustrating another example of an operation of a wearable device, according to an example embodiment; and
FIG. 29 is a flowchart illustrating a method of operating a wearable device, according to an example embodiment.

### DETAILED DESCRIPTION

The following detailed structural or functional description is provided as an example only and various alterations and modifications may be made to example embodiments. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if one component is described as being "connected", "coupled", or "joined" to another component, a third component(s) may be "connected", "coupled", and "joined" between the first and second components, although the first component may be directly connected, coupled, or joined to the second component. Thus, for example, "connected" as used herein covers direct and indirect connections.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, the example embodiments will be described in detail with reference to the accompanying drawings. When describing the example embodiments with reference to the accompanying drawings, like reference numerals refer to like elements and a repeated description related thereto will be omitted.

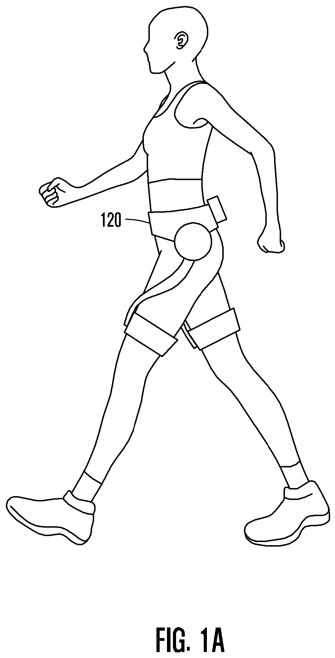

FIG. 1A is a diagram illustrating an overview of a wearable device worn on a body of a user, according to an embodiment.

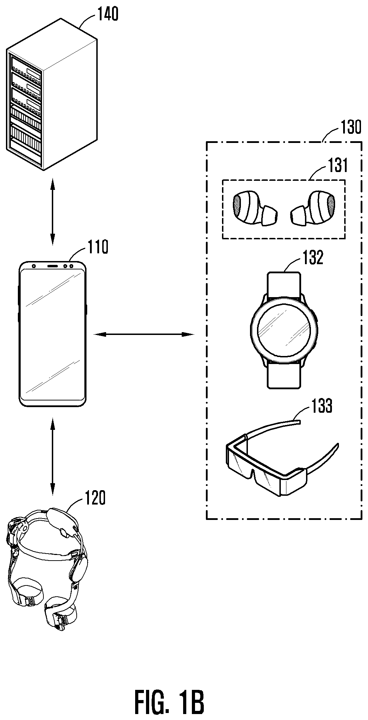

Referring to FIG. 1, a wearable device 120 may be a device worn on a body of a user to assist the user in walking, exercising, and/or working. In embodiments, the term "wearable device" may be replaced with "wearable robot," "walking assistance device," or "exercise assistance device". The user may be a human or an animal, but is not limited thereto. The wearable device 120 may be worn on a body (e.g., a lower body (the legs, ankles, knees, etc.), an upper body (the torso, arms, wrists, etc.), or the waist) of the user to provide an external force (e.g., an assistance force and/or a resistance force) to a body motion of the user. The assistance force may be a force applied in the same direction as the body motion direction of the user, and the resistance force may be a force applied in a direction opposite to the body motion direction of the user. The term "resistance force" may also be referred to as "exercise load".

When the wearable device 120 performs a walking assist function to assist the user in walking, the wearable device 120 may assist a portion or entirety of a leg of the user by providing an assistance force to the body of the user, thereby assisting the user in walking. The wearable device 120 may enable the user to walk independently or to walk for a long time by providing a force required for the user to walk, thereby extending the walking ability of the user. The wearable device 120 may help in improving an abnormal walking habit or walking posture of a walker.

When the wearable device 120 performs an exercise function to enhance the exercise effect of the user, the wearable device 120 may hinder a body motion of the user or provide resistance to a body motion of the user by providing a resistance force to the body of the user. When the wearable device 120 is, for example, a hip-type wearable device, the wearable device 120 may provide an exercise load to a body motion of the user while being worn on the legs, thereby enhancing the exercise effect of the user. The user may perform a walking motion while wearing the wearable device 120 for exercise. In this case, the wearable device 120 may apply a resistance force to the leg motion during the walking motion of the user.

In various embodiments, an example of a hip-type wearable device 120 that is worn on the waist and legs is described for ease of description. However, as described above, the wearable device 120 may be worn on another body part (e.g., the upper arms, lower arms, hands, calves, and feet) other than the waist and legs (particularly, the thighs), and the shape and configuration of the wearable device 120 may vary depending on the body part on which the wearable device 110 is worn.

FIG. 1B is a diagram illustrating an example of a system including a wearable device, according to an embodiment.

Referring to FIG. 1B, an electronic device 110 may communicate with the wearable device 120 and remotely control the wearable device 120. The electronic device 110 may be various types of devices. The electronic device 110 may include, for example, a portable communication device (e.g., a smart phone), a computer device, a portable multimedia device, or a home appliance, but is not limited thereto.

According to an embodiment, the electronic device 110 and/or the wearable device 120 may be connected to another wearable device 130. For example, the wearable device 120, the electronic device 110, and the other wearable device 130 may be connected to each other through a wireless communication link (e.g., a Bluetooth communication link). The other wearable device 130 may include, for example, one or more of wireless earphones 131, a smart watch 132, or smart glasses 133, but is not limited thereto. The smart watch 132 may be a watch-type wearable device (or a watch-type electronic device), and the smart glasses 133 may be an eyewear-type wearable device (or an eyewear-type electronic device).

In an embodiment, the smart watch 132 may control the wearable device 120. When the smart watch 132 is connected to the electronic device 110 through a wireless communication link, and the electronic device 110 is connected to the wearable device 120 through a wireless communication link, the smart watch 132 may control the wearable device 120 through the electronic device 110. Embodiments are not limited thereto, and the smart watch 132 may be directly connected to the wearable device 120 and control the wearable device 120.

In an embodiment, the electronic device 110 may transmit, to the other wearable device 130, a control signal to instruct to provide a user with feedback corresponding to a state of the wearable device 120. The other wearable device 130 may provide (or output) feedback (e.g., at least one of visual feedback, auditory feedback, or haptic feedback) corresponding to the state of the wearable device 120 in response to the reception of the control signal.

In an embodiment, the electronic device 110 may communicate with a server 140 using short-range wireless communication (e.g., Wi-Fi) or mobile communication (e.g., 4G, 5G, etc.).

In an embodiment, the electronic device 110 may receive profile information of the user from the user. The profile information may include, for example, at least one of the age, gender, height, weight, or body mass index (BMI), or a combination thereof. The electronic device 110 may transmit the profile information of the user to the server 140.

In an embodiment, the electronic device 110 and/or the wearable device 120 may request the user to perform one or more target motions to determine (or check) the exercise ability of the user. The one or more target motions may include, for example, a knee lift, a backward leg stretch, etc. A knee lift may be an exercise (or a motion) where the user starts in a standing position with both feet on the ground, raises a knee as high as possible without bending at the waist, and then returns to the standing position. A leg back stretch may be an exercise (or a motion) where the user starts in a standing position with hands on a wall, raises a leg back as far as possible without bending at the waist, and then returns to the standing position.

In an embodiment, the wearable device 120 may obtain motion information of the user performing a target motion using a sensor (e.g., an inertial measurement unit (IMU)), and transmit the obtained motion information to the electronic device 110. The electronic device 110 may transmit the obtained motion information to the server 140.

In an embodiment, the server 140 may determine a target amount of exercise of the user for each of the exercise types (e.g., strength training, balance exercise, and aerobic exercise) through the profile information and motion information received from the electronic device 110. The server 140 may transmit the target amount of exercise for each exercise type to the electronic device 110.

In an embodiment, the server 140 may include a database in which information about a plurality of exercise programs to be provided to the user through the wearable device 120 is stored. For example, the server 140 may manage a user account of the user of the electronic device 110 or the wearable device 120. The server 140 may store and manage a workout program performed by the user and a result of performance with respect to the workout program in link with the user account.

In an embodiment, the electronic device 110 and/or the server 140 may provide the user with various exercise programs to achieve an exercise goal in various exercise environments desired by the user. The exercise goal may include, for example, at least one of muscle strength improvement, physical strength improvement, cardiovascular endurance improvement, core stability improvement, flexibility improvement, or symmetry improvement, or a combination thereof.

In an embodiment, the electronic device 110 and/or the server 140 may recommend exercise programs to the user to achieve the exercise goal of the user. Each exercise program may include one or more exercise modes. For example, each exercise mode may be about a body motion to achieve a predetermined exercise goal. For example, running may be an exercise mode for improving the cardiovascular endurance of the user. For example, a lunge may be an exercise mode for improving the core stability of the user. A combination of a plurality of exercise modes forming each exercise program may vary according to the exercise goal of the user. The electronic device 110 may provide the user with various exercise programs according to the combination of the plurality of exercise modes, even for the same exercise goal.

In an embodiment, the plurality of exercise modes may be stored in the electronic device 110 or the server 140 as a database. The electronic device 110 or the server 140 may generate the plurality of exercise programs based on a variety of information about the user and recommend a target exercise program among the plurality of exercise programs to the user in consideration of the exercise goal or an exercise performance state of the user. For example, the electronic device 110 or the server 140 may determine the target exercise program to recommend to the user based on at least one of the exercise goal, an exercise history, or an exercise performance result of the user. Accordingly, a new exercise program may be recommended to the user even if the user performs an exercise every day under the same exercise goal, and the user may feel like performing a different exercise from the previous exercise by performing the new exercise program.

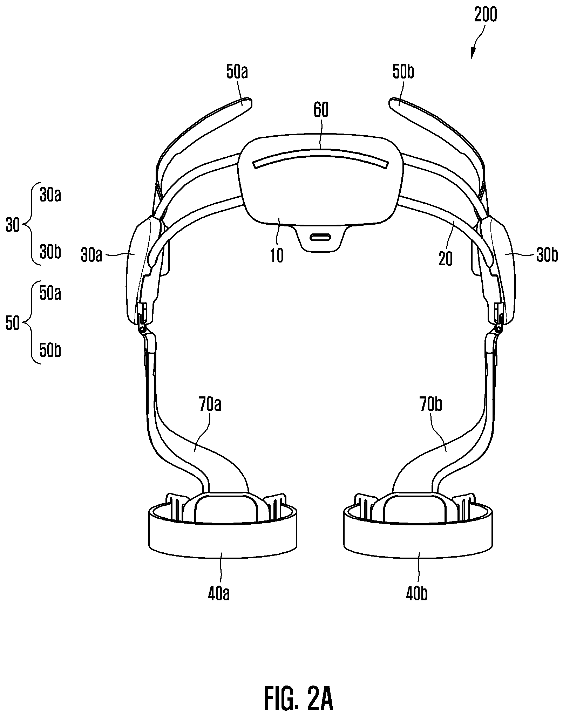

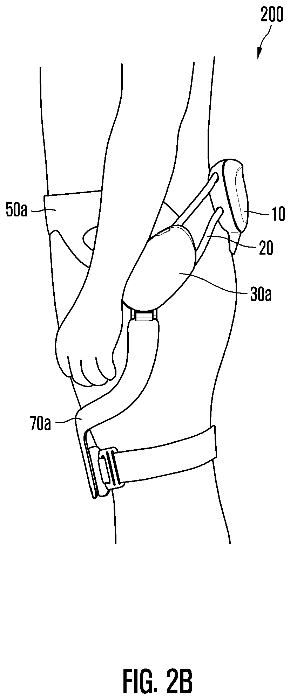

FIG. 2A is a rear schematic view of a wearable device according to an embodiment. FIG. 2B is a left side view of a wearable device according to an embodiment.

A wearable device 200 shown in FIGS. 2A and 2B may be an example of the wearable device 120.

Referring to FIG. 2A, the wearable device 200 according to an embodiment may include a lumbar support module 10, a lumbar frame 20, a driving module 30 comprising a motor and/or driving circuitry, thigh fastening portions 40a and 40b, a main belt 50, and thigh frames 70a and 70b.

According to an embodiment, the lumbar support module 10 may be positioned on the lumbar region (lower back area) of the user while the user is wearing the wearable device 200. The waist support module 10 may be mounted on the lumbar region of the user to provide a cushioning feeling to the waist of the user and support the waist of the user. The waist support module 10 may be hung on the hip region (an area of the hips) to prevent the wearable device 200 from being downwardly separated due to gravity while the user is wearing the wearable device 200. The waist support module 10, comprising a support, may distribute some of the weight of the wearable device 200 to the waist of the user while the user is wearing the wearable device 200. The lumbar support module 10 may be connected, directly or indirectly, to the lumbar frame 20. Connecting elements (not shown) that may be connected to the lumbar frame 20 may be formed at both end portions of the lumbar support module 10.

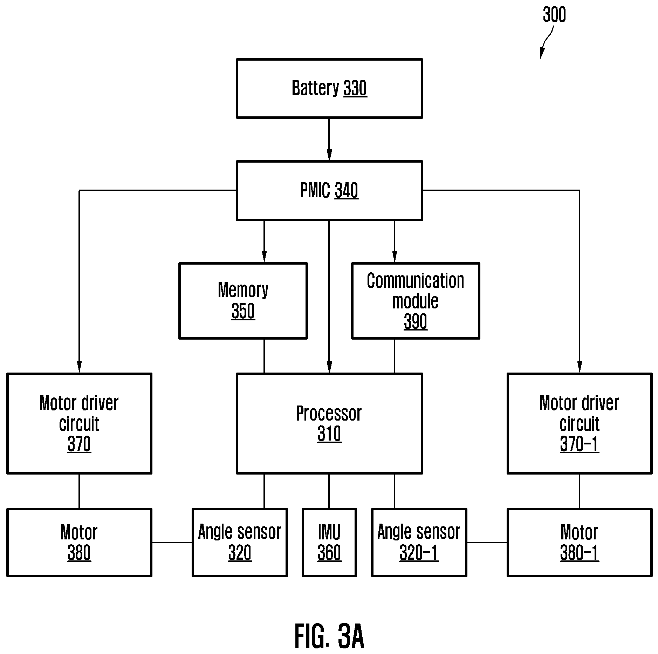

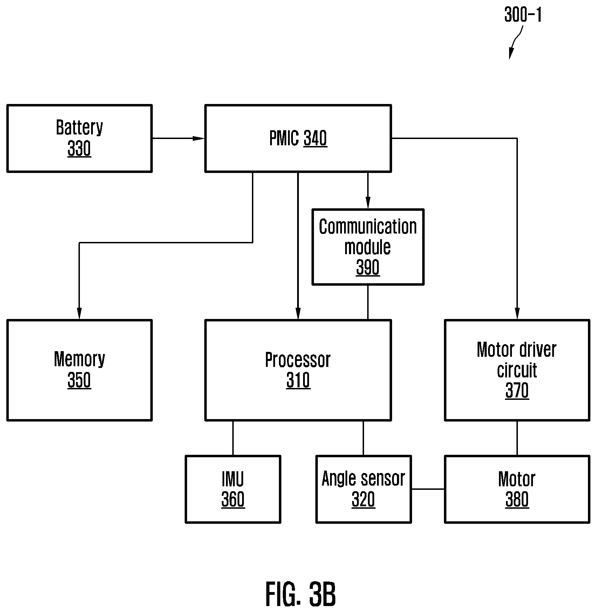

According to an embodiment, the waist support module 10 may include a lighting unit 60. The lighting unit 60 may include a plurality of light sources (e.g., light-emitting diodes (LEDs)). The lighting unit 60 may emit light by control of a processor (e.g., a processor 310 of FIGS. 3A and 3B described below). According to embodiments, the processor may control the lighting unit 60 such that visual feedback corresponding to the state of the wearable device 200 (e.g., a booting state, a sensing state, etc.) may be provided (or output) to the user through the lighting unit 60.

According to an embodiment, the lumbar frame 20 may extend from both end portions of the lumbar support module 10. The lumbar region of the user may be accommodated inside the lumbar frame 20. The lumbar support frame 20 may include at least one rigid body beam. Each beam may be in a curved shape having a preset curvature to enclose the lumbar region of the user. The main belt 50 may be connected, directly or indirectly, to an end portion of the lumbar frame 20. The driving module 30 may be mounted on the lumbar frame 20. The lumbar frame 20 may include a connector (not shown) for mounting the driving module 30 thereon.

According to an embodiment, the driving module 30 may include a first driving module 30a positioned on the left side of the user while the user is wearing the wearable device 200, and a second driving module 30b positioned on the right side of the user while the user is wearing the wearable device 200. Each "driving module" herein may comprise a motor and/or driving circuitry for the motor, and may optionally include at least one sensor (e.g., at least one angle sensor).

According to an embodiment, the first driving module 30a may include a first angle sensor (e.g., a first encoder or a first Hall sensor) for measuring the angle (e.g., a left hip joint angle) of a first joint of the user. The second driving module 30b may include a second angle sensor (e.g., a second encoder or a second Hall sensor) for measuring the angle (e.g., a right hip joint angle) of a second joint of the user.

According to an embodiment, the first driving module 30a and the second driving module 30b may generate a torque. The first driving module 30a may be connected, directly or indirectly, to the first thigh frame 70a and the second driving module 30b may be connected, directly or indirectly, to the second thigh frame 70b. The first driving module 30a may provide the generated torque to the left leg of the user through the first thigh frame 70a. The first thigh frame 70a may provide an external force to the left leg of the user by rotating through the torque generated by the first driving module 30a. The second driving module 30b may provide the generated torque to the right leg of the user through the second thigh frame 70b. The second thigh frame 70b may provide an external force to the right leg of the user by rotating through the torque generated by the second driving module 30b.

According to an embodiment, the thigh frames 70a and 70b may support the legs (e.g., thighs) of the user when the wearable device 200 is worn on the legs of the user. The thigh frames 70a and 70b may include the first thigh frame 70a for supporting the left leg of the user and the second thigh frame 70b for supporting the right leg of the user.

According to an embodiment, the thigh frames 70a and 70b may transmit a torque generated by, for example, the driving modules 30a and 30b to the thighs of the user. As one end portions of the thigh frames 70a and 70b are connected, directly or indirectly, to the driving modules 30a and 30b to rotate, and the other end portions of the thigh frames 70a and 70b are connected, directly or indirectly, to the thigh fastening portions 40a and 40b, the thigh frames 70a and 70b may transmit the torques generated by the driving modules 30a and 30b to the thighs of the user while supporting the thighs of the user. For example, the thigh frames 70a and 70b may push or pull the thighs of the user. The thigh frames 70a and 70b may extend in the longitudinal direction of the thighs of the user. The thigh frames 70a and 70b may be bent to surround at least a portion of the circumferences of the thighs of the user.

According to an embodiment, the thigh fastening portions 40a and 40b may be connected, directly or indirectly, to the thigh frames 70a and 70b and may fasten the thigh frames 70a and 70b to the thighs. The thigh fastening portions 40a and 40b may include the first thigh fastening portion 40a for fastening the first thigh frame 70a to the left thigh of the user and a second thigh fastening portion 40b for fastening the second thigh frame 70b to the right thigh of the user.

According to an embodiment, the first thigh fastening portion 40a may include a first cover, a first fastening frame, and a first strap, and the second thigh fastening portion 40b may include a second cover, a second fastening frame, and a second strap. The first cover and the second cover may be arranged on one sides of the thighs of the user. The first cover and the second cover may be arranged on the front surfaces of the thighs of the user. The first cover and the second cover may be arranged in the circumferential directions of the thighs of the user. The first cover and the second cover may extend to both sides from the other end portions of the thigh frames 70a and 70b and may include curved surfaces corresponding to the thighs of the user. One ends of the first cover and the second cover may be connected to the fastening frames, and the other ends thereof may be connected to the straps.

According to an embodiment, the first fastening frame and the second fastening frame may be arranged, for example, to surround at least some portions of the circumferences of the thighs of the user, thereby preventing the thighs of the user from being separated from the thigh frames 70a and 70b. The first fastening frame may have a fastening structure that connects the first cover and the first strap, and the second fastening frame may have a fastening structure that connects the second cover and the second strap.

According to an embodiment, the first strap may enclose the remaining portion of the circumference of the left thigh of the user that is not covered by the first cover and the first fastening frame, and the second strap may enclose the remaining portion of the circumference of the right thigh of the user that is not covered by the second cover and the second fastening frame. The first strap and the second strap may include, for example, an elastic material (e.g., a band).

According to an embodiment, the main belt 50 may be connected, directly or indirectly, to the lumbar frame 20. The main belt 50 may include a first main belt 50a configured to enclose the left abdomen of the user while the user is wearing the wearable device 200, and a second main belt 50b configured to enclose the right abdomen of the user while the user is wearing the wearable device 200. The first main belt 50a may be formed in a shape having a longer length than the second main belt 50b, but is not limited thereto, and the first main belt 50a may be formed in a shape having the same length as or a shorter length than the second main belt 50b. The first main belt 50a and the second main belt 50b may be connected, directly or indirectly, to both end portions of the lumbar frame 20, respectively. The main belt 50 may be bent in a direction to surround the abdomen of the user when the body of the user is inserted in such a direction that it is accommodated in the wearable device 200. The first main belt 50a and the second main belt 50b may be connected to each other while the user is wearing the wearable device 200. The main belt 50 may distribute a portion of the weight of the wearable device 200 to the abdomen of the user while the user is wearing the wearable device 200.

Referring to FIG. 2B, the waist support module 10 may be mounted on the back of the lumbar region of the user and be hung on the hip region of the user, thereby supporting some of the weight of the wearable device 200. The first driving module 30a may be arranged on the left lumbar region of the user. The lumbar frame 20 may extend from an end portion of the waist support module 10 and be inclined in a direction toward the first driving module 30a. The first main belt 50a mounted on the lumbar frame 20 may surround the left abdomen of the user.

FIGS. 3A and 3B are block diagrams illustrating examples of a configuration of a wearable device, according to an embodiment.

According to an embodiment, a wearable device 300 of FIG. 3A may include a processor 310 comprising processing circuitry, angle sensors 320 and 320-1, a battery 330, a power management integrated circuit (PMIC) 340, a memory 350, an IMU 360, motor driver circuits 370 and 370-1, motors (or actuators) 380 and 380-1, and a communication module 390 comprising communication circuitry.

Although the plurality of angle sensors 320 and 320-1, the plurality of motor driver circuits 370 and 370-1, and the plurality of motors 380 and 380-1 are shown in FIG. 3, which is merely an example, the wearable device 300-1 in the example shown in FIG. 3B may include a single angle sensor 320, a single motor driver circuit 370, and a single motor 380. Also, according to the implementation, the wearable devices 300 and 300-1 may include a plurality of processors. The number of motor driver circuits, the number of motors, or the number of processors may vary depending on a body part on which the wearable devices 300 and 300-1 are worn. Each "processor" herein includes processing circuitry, and/or may include multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The wearable device 300 in FIG. 3A and the wearable device 300-1 of FIG. 3B may be examples of the wearable device 120 and the wearable device 200.

According to an embodiment, the angle sensor 320, the motor driver circuit 370, and the motor 380 may be included in the first driving module 30a of FIG. 2A, and the angle sensor 320-1, the motor driver circuit 370-1, and the motor 380-1 may be included in the second driving module 30b of FIG. 2A.

According to an embodiment, the angle sensor 320 and the angle sensor 320-1 may each correspond to a Hall sensor, but are not limited thereto.

According to an embodiment, the angle sensor 320 may measure or sense the angle of the first thigh frame 70a (or the angle of the first joint (e.g., left hip joint, etc.) of the user). The angle sensor 320 may transmit the measurement result (e.g., an angle value of the angle of the first thigh frame 70a) to the processor 310.

According to an embodiment, the angle sensor 320-1 may measure or sense the angle of the second thigh frame 70b (or the angle of the second joint (e.g., right hip joint) of the user). The angle sensor 320 may transmit the measurement result (e.g., an angle value of the angle of the second thigh frame 70b) to the processor 310.

According to an embodiment, the angle sensor 320 and the angle sensor 320-1 may additionally measure the knee angles and ankle angles of the user according to the positions of the angle sensor 320 and the angle sensor 320-1.

According to an embodiment, the wearable devices 300 and 300-1 may include a potentiometer. The potentiometer may sense an R-axis joint angle, an L-axis joint angle, an R-axis joint angular velocity, and an L-axis joint angular velocity according to a walking motion of the user. In this example, the R and L axes may be reference axes for the right leg and the left leg of the user, respectively. For example, the R/L axis may be set to be vertical to the ground and set such that a front side of a body of a person has a negative value and a rear side of the body has a positive value.

According to an embodiment, the PMIC 340 may charge the battery 330 using power supplied from an external power source. For example, the external power source and the wearable devices 300 and 300-1 may be connected through a cable (e.g., a universal serial bus (USB) cable, etc.). The PMIC 340 may receive power from the external power source through the cable, and charge the battery 330 using the received power. According to embodiments, the PMIC 340 may charge the battery 330 through a wireless charging method.

According to an embodiment, the PMIC 340 may transmit power stored in the battery 330 to a component (e.g., the processor 310, the memory 350, the IMU 360, the communication module 390, etc.) in the wearable devices 300 and 300-1. The PMIC 340 may, for example, adjust the power stored in the battery 330 to a voltage or current level suitable for the components in the wearable device 300. The PMIC 340 may include, for example, a converter (e.g., a direct current (DC)-DC converter) or a regulator (e.g., a low-dropout (LDO) regulator or a switching regulator) configured to perform the adjustment described above.

According to an embodiment, the PMIC 340 may determine state information (e.g., a state of charge, a state of health, an overvoltage, a low voltage, an overcurrent, an overcharge, an overdischarge, an overheating, a short circuit, or a swelling) of the battery 330, and transmit the state information of the battery 330 to the processor 310. The processor 310 may control to provide the state information of the battery 330 to the user. For example, the processor 310 may output the status information of the battery 330 through at least one of a sound output module (e.g., a speaker), a vibration output module (e.g., a vibration motor or a haptic motor), or a display module (e.g., a display or the lighting unit 60). For example, the processor 310 may transmit the state information of the battery 330 to the electronic device 110 through the communication module 390, and the electronic device 110 may display the state information of the battery 330 on the display.

According to an embodiment, the IMU 360 may obtain motion information of the wearable devices 300 and 300-1 (or the user). For example, the IMU 360 may obtain rotation angle values (e.g., an angle value of an X rotation angle, an angle value of a Y rotation angle, and an angle value of a Z rotation angle) of the waist support module 10 (or the user). The X rotation angle may be, for example, an angle at which the waist support module 10 rotates about the X-axis, the Y rotation angle may be, for example, an angle at which the waist support module 10 rotates around the Y-axis, and the Z rotation angle may be, for example, an angle at which the waist support module 10 rotates around the Z-axis. The IMU 360 may transmit the obtained motion information (e.g., rotation angle values) to the processor 310. Depending on the implementation, the IMU 360 may, for example, obtain three-axis (e.g., X-axis, Y-axis, Z-axis) acceleration values and angular acceleration values of the waist support module 10 (or the user) and may transmit the obtained acceleration values and angular acceleration values to the processor 310. The processor 310 may determine rotation angle values of the waist support module 10 (or the user) based on at least some of the obtained acceleration values and the angular acceleration values.

According to an embodiment, the processor 310 may control the overall operation of the wearable devices 300 and 300-1.

According to an embodiment, the processor 310 may be operatively connected to at least one or all of the angle sensors 320 and 320-1, the memory 350, or the IMU 360.

According to an embodiment, the processor 310 may, for example, control the components (e.g., the motor driver circuits 370 and 370-1, etc.) in the wearable devices 300 and 300-1 by executing software (e.g., a program or instructions) stored in the memory 350, and perform various data processing or computation. As at least a portion of the data processing or computation, the processor 310 may store data received from other components (e.g., the IMU 360, the angle sensors 320 and 320-1, etc.) in the memory 350, and process the instructions or data stored in the memory 350.

According to an embodiment, the motor driver circuits 370 and 370-1 may control the motors 380 and 380-1, respectively, under the control by the processor 310, and each of the motors 380 and 380-1 may generate a torque by this control.

According to an embodiment, the communication module 390, comprising communication circuitry, may support the establishment of a direct (or wired) communication channel or a wireless communication channel between the wearable device 300, 300-1 and an external electronic device, and support the communication through the established communication channel. The communication module may include one or more communication processors configured to support direct (or wired) communication or wireless communication. According to an embodiment, the communication module may include a wireless communication module (e.g., a cellular communication module, a short-range wireless communication module, or a global navigation satellite system (GNSS) communication module) or a wired communication module (e.g., a local area network (LAN) communication module or a power line communication (PLC) module). A corresponding one of these communication modules may communicate with the external electronic device via a first network (e.g., a short-range communication network such as Bluetooth^{™}, wireless-fidelity (Wi-Fi) direct, or infrared data association (IrDA)) or a second network (e.g., a legacy cellular network, a 5G network, a next-generation communication network, the Internet, or a computer network). These various types of communication modules may be implemented as a single component (e.g., a single chip), or may be implemented as multiple components (e.g., multiple chips) separate from each other.

According to an embodiment, the wearable devices 300 and 300-1 may include a display module. The display module may include, for example, a display and/or a lighting unit (e.g., the lighting unit 60 of FIG. 2A). The processor 310 may control the display module so that the display module may provide visual feedback to the user.

According to an embodiment, the wearable devices 300 and 300-1 may include a sound output module. The sound output module may include, for example, one or more speakers. The processor 310 may control the sound output module so that the sound output module may provide auditory feedback to the user.

According to an embodiment, the wearable devices 300 and 300-1 may include a vibration output module. The vibration output module may include, for example, one or more vibration motors or one or more haptic motors. The processor 310 may control the vibration output module so that the vibration output module may provide tactile feedback (or haptic feedback) to the user.

According to an embodiment, at least one of the processor 310, the battery 330, the PMIC 340, the memory 350, the IMU 360, the communication module 390, the display module, the sound output module, or the vibration output module, or a combination thereof may be positioned in the waist support module 10 of FIGS. 2A and 2B.

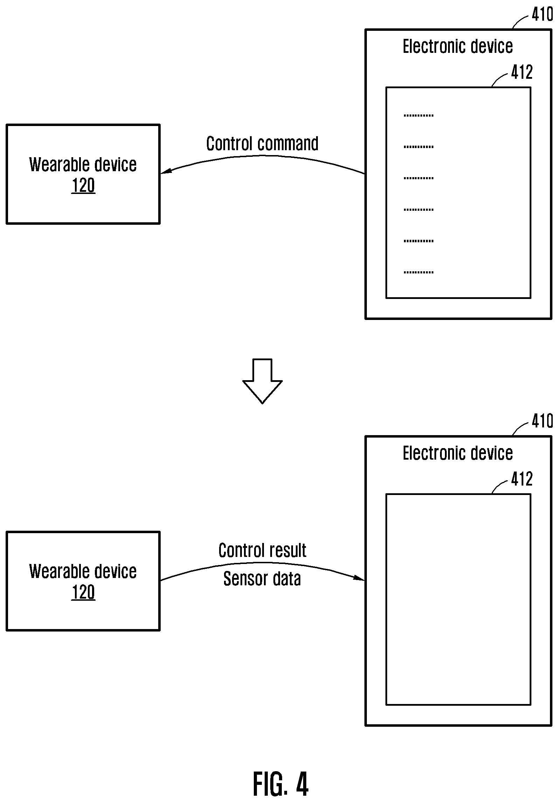

FIG. 4 is a diagram illustrating an interaction between a wearable device and an electronic device, according to an embodiment.

Referring to FIG. 4, the wearable device 120 may communicate with an electronic device 410 (e.g., a smartphone or smartwatch, including but not limited to 110 and/or 130). For example, the electronic device 410 may be a user terminal of the user who uses the wearable device 120 or a controller device dedicated to the wearable device 120. According to an embodiment, the wearable device 120 and the electronic device 410 may be connected to each other through short-range wireless communication (e.g., Bluetooth^{™} or Wi-Fi communication).

According to an embodiment, the electronic device 410 may verify a state of the wearable device 120 or execute an application to control or operate the wearable device 120. A screen of a user interface (UI) may be displayed to control an operation of the wearable device 120 or determine an operation mode of the wearable device 120 on a display 412 of the electronic device 410 through the execution of the application. The UI may be, for example, a GUI.

According to an embodiment, the user may input an instruction to control an operation of the wearable device 120 through the GUI screen on the display 412 of the electronic device 410 (e.g., an instruction to instruct the wearable device 120 to operate in an assistance mode of generating an assistance force or an instruction to instruct the wearable device 120 to operate in a resistance mode of generating a resistance force) or change settings of the wearable device 120. The electronic device 410 may generate a control instruction (or control signal) corresponding to an operation control instruction or a setting change instruction input by the user and transmit the generated control instruction to the wearable device 120. The wearable device 120 may operate according to the received control instruction and transmit a control result according to the control instruction and/or sensor data measured by the sensor (e.g., the angle sensors 320 and 320-1 and/or the IMU 360) of the wearable device 120 to the electronic device 410. The electronic device 410 may provide the user with result information (e.g., walking ability information, exercise ability information, or exercise posture evaluation information) derived by analyzing the control result and/or the sensor data through the GUI screen.

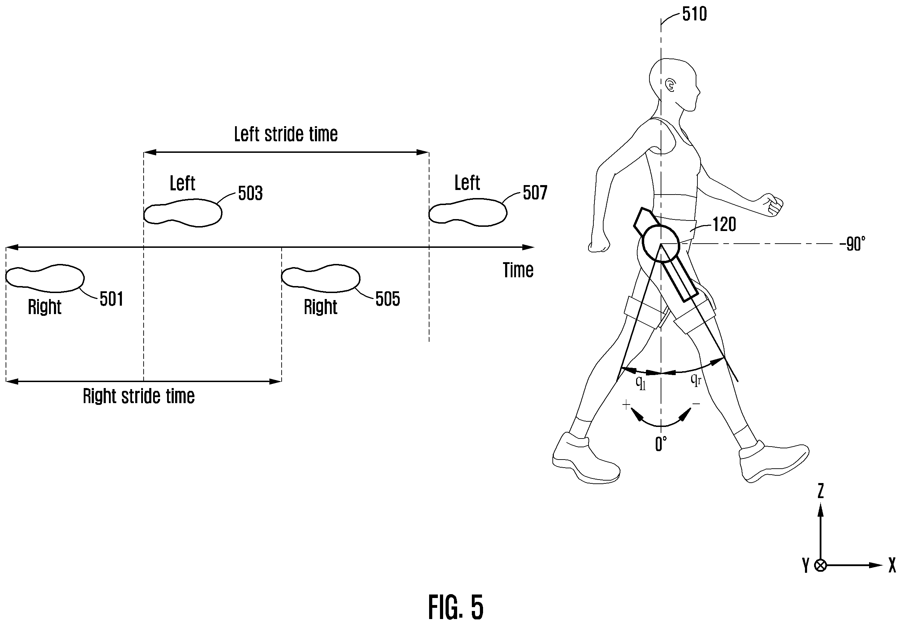

FIG. 5 is a diagram illustrating an example of an operation of a wearable device, according to an embodiment.

FIG. 5 illustrates a first position 501 at a first time point at which the right foot of a user touches the ground, a second position 503 at a second time point at which the left foot of the user touches the ground after the first time point, a third position 505 at a third time point at which the right foot of the user touches the ground again after the second time point, and a fourth position 507 at a fourth time point at which the left foot of the user touches the ground again after the third time point.

In the example illustrated in FIG. 5, the length from the first position 501 at which the right foot of the user touches the ground to the third position 505 at which the right foot of the user touches the ground may correspond to the right stride length of the user, and the difference between the third time point and the first time point may correspond to the right stride time of the user. The length from the second position 503 at which the left foot of the user touches the ground to the fourth position 507 at which the left foot of the user touches the ground may correspond to the left stride length of the user, and the difference between the fourth time point and the second time point may correspond to the left stride time of the user.

In the example illustrated in FIG. 5, one step of the user may be, for example, the motion of a first foot of the user touching the ground and then touching the ground again. For example, the motion of the right foot of the user being in the first position 501 and then in the third position 505 may correspond to one step. The motion of the left foot of the user being in the second position 503 and then in the fourth position 507 may correspond to one step.

According to an embodiment, a hip joint angle of the user may have a negative number value when the hip joint of the user rotates forward from a line 510 in the direction of gravity (or when a leg of the user is in front of the line 510 in the direction of gravity). When the hip joint of the user rotates backward from the line 510 in the direction of gravity (or when a leg of the user is behind the line 510 in the direction of gravity), the hip joint angle of the user may have a positive number value. For example, in the example illustrated in FIG. 5, the right hip joint of the user may be in a state of rotating forward from the line 510 in the direction of gravity, so a right hip joint angle qᵣ may have a negative number value, and the left hip joint of the user may be in a state of rotating backward from the line 510 in the direction of gravity, so a left hip joint angle qₗ may have a positive number value.

According to an embodiment, when the direction of a torque provided by the wearable device 120 to the user is in a first direction (e.g., counterclockwise direction), the sign of the torque may be a first sign (e.g., minus), and when the direction of the torque provided by the wearable device 120 to the user is in a second direction (e.g., clockwise direction), the sign of the torque may be a second sign (e.g., plus).

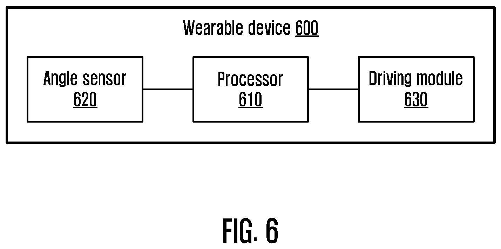

FIG. 6 is a block diagram illustrating an example of a configuration of a wearable device, according to an embodiment.

Referring to FIG. 6, according to an embodiment, a wearable device 600 (e.g., the wearable device 120, the wearable device 200, the wearable device 300, and the wearable device 300-1) may include a processor 610 (e.g., the processor 310), an angle sensor 620, and a driving module 630 (e.g., the driving module 30).

According to an embodiment, the processor 610 may include a processing circuit and control the driving module 630 such that a torque (e.g., a resistance torque or an assistance torque) may be output by the driving module 630.

According to an embodiment, the angle sensor 620 may sense or measure a joint angle (e.g., a hip joint angle) of a user and transmit a sensing result (or measurement result) (e.g., a joint angle value) to the processor 610. For example, the angle sensor 620 may include the angle sensor 320 and/or the angle sensor 320-1. The angle sensor 320 may sense the left hip joint angle of the user. The angle sensor 320-1 may sense the right hip joint angle of the user.

According to an embodiment, the driving module 630 may include one or more motors (e.g., the motor 380 and/or the motor 380-1) and one or more motor driver circuits (e.g., the motor driver circuit 370 and/or the motor driver circuit 370-1). The driving module 630 may include the first driving module 30a and/or the second driving module 30b.

According to an embodiment, the processor 610 may obtain the joint angle of the user using the angle sensor 620. For example, the processor 610 may obtain the left hip joint angle of the user using the angle sensor 320 and obtain the right hip joint angle of the user using the angle sensor 320-1. In another example, the angle sensor 620 may sense a difference q_{d} between the left hip joint angle qₗ of the user and the right hip joint angle qᵣ of the user. The processor 610 may obtain the left hip joint angle qₗ (e.g., q_{d}/2) and the right hip joint angle qᵣ (e.g., -q_{d}/2) based on the difference q_{d} between the left hip joint angle qₗ and the right hip joint angle qᵣ. q_{d} may correspond to, for example, the difference (e.g., qₗ-qᵣ) between qₗ and qᵣ. While the absolute value of the left hip joint angle qₗ may be similar to the absolute value of the right hip joint angle qᵣ, the sign of the left hip joint angle qₗ may be different from the sign of the right hip joint angle qᵣ. In this case, the processor 610 may determine q_{d}/2 as the left hip joint angle qₗ and -q_{d}/2 as the right hip joint angle qᵣ.

According to an embodiment, the processor 610 may process the left hip joint angle and the right hip joint angle to correct (or remove) a DC component (or DC offset) of each of the left hip joint angle of the user and the right hip joint angle of the user. A DC component may be, for example, a component with a frequency of 0 in a frequency domain.

According to an embodiment, the processor 610 may determine a first torque value based on the processed left hip joint angle. The processor 610 may determine a second torque value based on the processed right hip joint angle. For example, through a determined mapping relationship (e.g., a mapping relationship between a hip joint angle and a torque value), the processor 610 may determine the first torque value based on the processed left hip joint angle and determine the second torque value based on the processed right hip joint angle.

According to an embodiment, the processor 610 may determine one of the first torque value and the second torque value as a target torque value, based on movement information of the user. The movement information of the user may include, for example, at least one of the left hip joint angle of the user, the right hip joint angle of the user, a left hip joint angular velocity of the user, a right hip joint angular velocity of the user, or sensing data of an IMU sensor (e.g., the IMU 360 of FIG. 3A or the IMU 360 of FIG. 3B).

According to an embodiment, the processor 610 may control the driving module 630 so that a torque based on the determined target torque value is output (or provided) by the driving module 630.

For example, when determining the first target value as the target torque value, the processor 610 may control the driving module 630 (or the first driving module 30a) such that a torque corresponding to the target torque value (e.g., the first target value) is output (or provided ) to the left leg of the user. The driving module 630 (or the first driving module 30a) may output (or provide) the torque corresponding to the target torque value (e.g., the first target value) to the left leg of the user. The processor 610 may control the driving module 630 (or the second driving module 30b) such that a torque (or a torque corresponding to a negative value of the target torque value) in the opposite direction to the torque corresponding to the target torque value (e.g., the first target value) is output to the right leg of the user. The driving module 630 (or the second driving module 30b) may output (or provide) the torque in the opposite direction to the torque corresponding to the target torque value (e.g., the first target value) to the right leg of the user.

In another example, when determining the second target value as the target torque value, the processor 610 may control the driving module 630 (or the second driving module 30b) such that the torque corresponding to the target torque value (e.g., the second target value) is output (or provided) to the right leg of the user. The driving module 630 (or the second driving module 30b) may output (or provide) the torque corresponding to the target torque value (e.g., the second target value) to the right leg of the user. The processor 610 may control the driving module 630 (or the first driving module 30a) such that the torque (or the torque corresponding to the negative value of the target torque value) in the opposite direction to the torque corresponding to the target torque value (e.g., the second target value) is output to the left leg of the user. The driving module 630 (or the first driving module 30a) may output (or provide) the torque in the opposite direction to the torque corresponding to the target torque value (e.g., the second target value) to the left leg of the user.

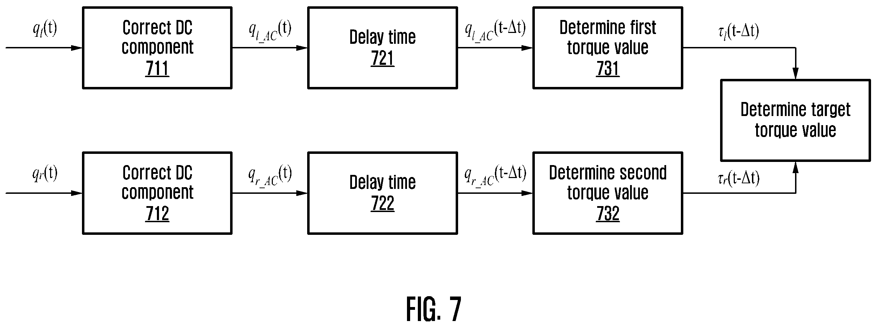

FIG. 7 is a block diagram schematically illustrating an operation of a wearable device, according to an embodiment.

The operations of FIG. 7 may be performed by the wearable device 600.

According to an embodiment, the wearable device 600 (e.g., the processor 610) may obtain a left hip joint angle (e.g., qₗ(t)) and a right hip joint angle (e.g., qᵣ(t)) using the angle sensor 620. A time t may denote, for example, a discrete time.

According to an embodiment, in operation 711, the wearable device 600 (e.g., the processor 610) may obtain a processed left hip joint angle (e.g., q_{l_AC}(t)) by correcting a DC component (or DC offset) of the left hip joint angle (e.g., qₗ(t)). In operation 712, the wearable device 600 (e.g., the processor 610) may obtain a processed right hip joint angle (e.g., q_{r_AC}(t)) by correcting a DC component (or DC offset) of the right hip joint angle (e.g., qᵣ(t)). Each of the processed left hip joint angle (e.g., q_{l_AC}(t)) and the processed right hip joint angle (e.g., q_{r_AC}(t)) may have the DC component removed or the DC component reduced.

According to an embodiment, in operation 721, the wearable device 600 (e.g., the processor 610) may perform a time delay on the processed left hip joint angle (e.g., q_{l_AC}(t)). For example, the wearable device 600 (e.g., the processor 610) may store the processed left hip joint angle in a first register. The wearable device 600 (e.g., the processor 610) may retrieve (or obtain) the processed left hip joint angle from the first register after a time equivalent to a time value (or a time value related to a torque output time) (e.g., Δ*t*) related to a torque output delay is delayed. The result of performing the time delay on q_{l_AC}(t) (or the left hip joint angle obtained after the time delay) may be expressed as, for example, q_{l_AC}(t-Δt). In operation 722, the wearable device 600 (e.g., the processor 610) may perform a time delay on the processed right hip joint angle (e.g., q_{r_AC}(t)). For example, the wearable device 600 (e.g., the processor 610) may store the processed right hip joint angle in a second register. The wearable device 600 (e.g., the processor 610) may retrieve (or obtain) the processed right hip joint angle from the second register after a time equivalent to the time value (e.g., Δt) related to the torque output delay is delayed. The result of performing the time delay on q_{r_AC}(t) may be expressed as, for example, q_{r_AC}(t-Δt).

According to an embodiment, in operation 731, the wearable device 600 (e.g., the processor 610) may determine a first torque value (e.g., τₗ(t-Δt)) based on the left hip joint angle (e.g., q_{l_AC}(t-Δt)) obtained after the time is delayed. For example, the wearable device 600 (e.g., the processor 610) may determine, through the determined mapping relationship (e.g., a linear function, a clipping function, a sinusoidal function, a logistic function, etc.), the first torque value based on the left hip joint angle obtained after the time is delayed. In operation 732, the wearable device 600 (e.g., the processor 610) may determine a second torque value (e.g., τᵣ(t-Δt)) based on the right hip joint angle (e.g., q_{r_AC}(t-Δt)) obtained after the time is delayed. For example, the wearable device 600 (e.g., the processor 610) may determine, through the determined mapping relationship (e.g., a linear function, a clipping function, a sinusoidal function, a logistic function, etc.), the second torque value based on the right hip joint angle obtained after the time is delayed. According to an embodiment, the mapping relationship used to determine the first torque value may be the same as the mapping relationship used to determine the second torque value. However, embodiments are not limited thereto, and the mapping relationship used to determine the first torque value may be different from the mapping relationship used to determine the second torque value.

According to an embodiment, in operation 740, the wearable device 600 (e.g., the processor 610) may determine a target torque value (e.g., τ_{target}(t-Δt)) from among the first torque value and the second torque value based on the movement information of the user. The target torque value may be, for example, a torque value that forms a basis for a torque provided to the user by the wearable device 600.

According to an embodiment, although not shown in FIG. 7, the wearable device 600 (e.g., the processor 610) may determine the first torque value (e.g., τₗ(t-Δt)) as the target torque value (e.g., τ_{target}(t-Δt)). For example, τ_{target}(t-Δt)=τₗ(t-Δt). The wearable device 600 may output or provide a torque of the target torque value (e.g., τ_{target}(t-Δt)=τₗ(t-Δt)) to the left leg of the user through the driving module 630 (or the first driving module 30a) and may output or provide a torque of a negative number value (e.g., -τ_{target}(t-Δt)) of the target torque value to the right leg of the user through the driving module 630 (or the second driving module 30b).

According to an embodiment, although not shown in FIG. 7, the wearable device 600 (e.g., the processor 610) may determine the second torque value (e.g., τᵣ(t-Δt)) as the target torque value (e.g., τ_{target}(t-Δt)). For example, it may be possible that τ_{target}(t-Δt))=τᵣ(t-Δt). The wearable device 600 may output or provide a torque of the target torque value (e.g., τ_{target}(t-Δt)=τₗ(t-Δt)) to the right leg of the user through the driving module 630 (or the second driving module 30b) and may output or provide a torque of a negative value (e.g., -τ_{target}(t-Δt)) of the target torque value to the left leg of the user through the driving module 630 (or the first driving module 30a).

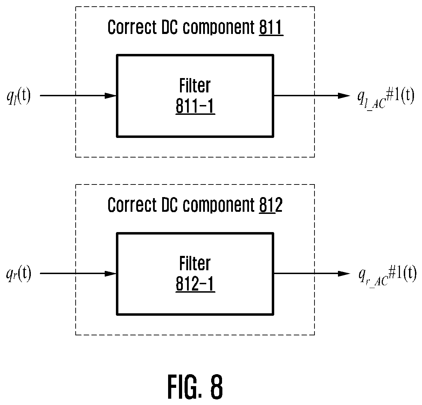

FIGS. 8, 9, 10, and 11 are diagrams illustrating examples in which a wearable device corrects a DC component of a hip joint angle of a user, according to an embodiment.

Operation 811 of FIG. 8 may be an example of operation 711 of FIG. 7, and operation 812 of FIG. 8 may be an example of operation 712 of FIG. 7.

Referring to FIG. 8, in operation 811, the wearable device 600 (e.g., the processor 610) may correct (or remove) a DC component (or DC offset) of the left hip joint angle (e.g., qₗ(t)) of the user through a filter 811-1. The wearable device 600 may correct (or remove) the DC component of the left hip joint angle values of the user through the filter 811-1. Through this correction, the wearable device 600 may obtain the left hip joint angle (e.g., FIG. 8 *q_{l_AC}*#1(*t*)) with the DC component corrected. For example, it may be possible that *q_{l_AC}*#1(*t*) = *qₗ*(*t*) - *qₗ*(*t* - 1) + *R* × *q_{l_AC}*#1(*t* - 1). Here, R may have a value betweeen 0.9 and 1.0.

In operation 812, the wearable device 600 (e.g., the processor 610) may correct (or remove) the DC component (or DC offset) of the right hip joint angle (e.g., qᵣ(t)) of the user through a filter 812-1. The wearable device 600 may correct (or remove) the DC component of the right hip joint angle values of the user through the filter 812-1. Through this correction, the wearable device 600 may obtain the right hip joint angle (e.g., *q_{r_AC}*#1(*t*) of FIG. 8) with the DC component corrected. For example, it may be possible that *q_{r_AC}*#1(*t*) = *qᵣ*(*t*) - *qᵣ*(*t* - 1) + *R* × *q_{r_AC}*#1(*t* - 1).

According to an embodiments, each of the filter 811-1 and the filter 812-1 may be a filter (e.g., a notch filter, etc.) that may block (or remove) 0 Hertz (Hz) data (or a signal). A transfer function by z-transform of each of the filter 811-1 and the filter 812-1 may be expressed by the following Equation 1.$H \left(z\right) = \frac{1 - {z}^{- 1}}{1 - R ⋅ {z}^{- 1}}$

In Equation 1 above, R may have a value between 0.9 and 1.0.

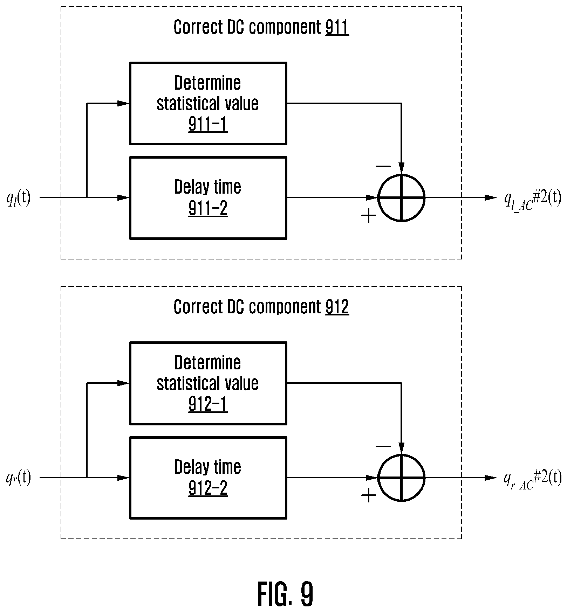

In FIG. 9, operation 911 of FIG. 9 may be an example of operation 711 of FIG. 7 and operation 912 of FIG. 9 may be an example of operation 712 of FIG. 7.

Referring to FIG. 9, in operation 911, the wearable device 600 (e.g., the processor 610) may obtain the left hip joint angle (e.g., q*_{l_AC}*#2(*t*) of FIG. 9) with the DC component corrected by correcting (or removing) the DC component (or DC offset) of the left hip joint angle (e.g., qₗ(t)). In operation 912, the wearable device 600 (e.g., the processor 610) may obtain the right hip joint angle (e.g., *q_{r_AC}#*2(*t*) of FIG. 9) with the DC component corrected by correcting (or removing) the DC component (or DC offset) of the right hip joint angle (e.g., qᵣ(t)) of the user. Hereinafter, operations 911 and 912 are described in detail.

In the example illustrated in FIG. 9, the wearable device 600 (e.g., the processor 610) may obtain the left hip joint angle value (e.g., qₗ_1) and the right hip joint angle value (e.g., qᵣ_1) of the user. The wearable device 600 (e.g., the processor 610) may perform a time delay on the left hip joint angle value (e.g., qₗ_1) in operation 911-2 until a statistical value (e.g., an average value, a moving average (MA) value, a median value, half of the difference between a maximum and a minimum, etc.) of a determined number (e.g., five) of left hip joint angle values is determined. For example, the processor 610 may store the left hip joint angle value (e.g., qₗ_1) in a third register until the statistical value of the determined number of left hip joint angle values is determined. The wearable device 600 (e.g., the processor 610) may perform a time delay on the right hip joint angle value (e.g., qᵣ_1) in operation 912-2 until a statistical value (e.g., an average value, an MA value, a median value, half of the difference between a maximum and a minimum, etc.) of a determined number (e.g., five) of right hip joint angle values is determined. For example, the processor 610 may store a right hip joint angle value (e.g., qᵣ_1) in a fourth register until the statistical value of the determined number of right hip joint angle values is determined.

The wearable device 600 (e.g., the processor 610) may sequentially obtain each of the left hip joint angle values (e.g., qₗ_2, qₗ_3, qₗ_4, and qₗ_5) after obtaining the left hip joint angle value (e.g., qₗ_1). The wearable device 600 (e.g., the processor 610) may sequentially obtain each of the right hip joint angle values (e.g., qᵣ_2, qᵣ_3, qᵣ_4, and qᵣ_5) after obtaining the right hip joint angle value (e.g., qᵣ_1).

The determined number (e.g., five) of left hip joint angle values (e.g. qₗ_1, qₗ_2, qₗ_3, qₗ_4, and qₗ_5) may be satisfied. In this case, in operation 911-1, the wearable device 600 (e.g., the processor 610) may determine the statistical value of the left hip joint angle values (e.g., qₗ_1, qₗ_2, qₗ_3, qₗ_4, and qₗ_5). For example, the processor 610 may calculate an MA value (e.g., MAₗ_1) of the left hip joint angle values (e.g., qₗ_1, qₗ_2, qₗ_3, qₗ_4, and qₗ_5). In another example, the processor 610 may determine a median value (e.g., medianₗ_1) of the left hip joint angle values (e.g., qₗ_1, qₗ_2, qₗ_3, qₗ_4, and qₗ_5). In another example, the processor 610 may determine a maximum (e.g., maxₗ_1) and a minimum (e.g., minₗ_1) among the left hip joint angle values (e.g., qₗ_1, qₗ_2, qₗ_3, qₗ_4, and qₗ_5) and calculate half of the difference between the maximum and the minimum (e.g., maxₗ_1-minₗ_1)/2).

The number of right hip joint angle values (e.g. qᵣ_1, qᵣ_2, qᵣ_3, qᵣ_4, and qᵣ_5) may satisfy the determined number (e.g., 5). In this case, in operation 912-1, the wearable device 600 (e.g., the processor 610) may determine the statistical value of the right hip joint angle values (e.g., qᵣ_1, qᵣ_2, qᵣ_3, qᵣ_4, and qᵣ_5). For example, the processor 610 may calculate an MA value (e.g., MAᵣ_1) of the right hip joint angle values (e.g., qᵣ_1, qᵣ_2, qᵣ_3, qᵣ_4, and qᵣ_5). In another example, the processor 610 may determine a median value (e.g., medianᵣ_1) of the right hip joint angle values (e.g., qᵣ_1, qᵣ_2, qᵣ_3, qᵣ_4, and qᵣ_5). In another example, the processor 610 may determine a maximum (e.g., maxᵣ_1) and a minimum (minᵣ_1) from among the right hip joint angle values (e.g., qᵣ_1, qᵣ_2, qᵣ_3, qᵣ_4, and qᵣ_5) and calculate half (e.g., maxᵣ_1-minᵣ_1)/2) of the difference between, for example, two different values such as between the maximum and minimum.

When determining the statistical value (e.g., MAₗ_1, medianₗ_1 or (maxₗ_1-minₗ_1)/2) of the left hip joint angle values (e.g., qₗ_1, qₗ_2, qₗ_3, qₗ_4, and qₗ_5), the wearable device 600 (e.g., the processor 610) may correct the DC component of the left hip joint angle value (e.g., qₗ_1) by subtracting the statistical value (e.g., MAₗ_1, medianₗ_1 or (maxₗ_1-minₗ_1)/2) from the left hip joint angle value (e.g., qₗ_1).

When determining the statistical value (e.g., MAᵣ_1, medianᵣ_1 or (maxᵣ_1-minᵣ_1)/2) of the right hip joint angle values (e.g., qᵣ_1, qᵣ_2, qᵣ_3, qᵣ_4, and qᵣ_5), the wearable device 600 (e.g., the processor 610) may correct the DC component of the right hip joint angle value (e.g., qᵣ_1) by subtracting the statistical value (e.g., MAᵣ_1, medianᵣ_1, or (maxᵣ_1-minᵣ_1)/2) from the right hip joint angle value (e.g., qᵣ_1).

In the same manner as the DC component correction of the left hip joint angle value (e.g., qₗ_1), the wearable device 600 (e.g., the processor 610) may correct the DC component of a left hip joint angle value (e.g., qₗ_2), which is the subsequent value of the left hip joint angle value (e.g., qₗ_1). The wearable device 600 (e.g., the processor 610) may obtain a left hip joint angle value (e.g., qₗ_6) and determine the statistical value (e.g., MAₗ_2, medianₗ_2, or (maxₗ_2-minₗ_2)/2) of the left hip joint angle values (e.g. , qₗ_2, qₗ_3, qₗ_4, qₗ_5, and qₗ_6). The wearable device 600 (e.g., the processor 610) may correct the DC component of the left hip joint angle value (e.g., qₗ_2) by subtracting the statistical value (e.g., MAₗ_2, medianₗ_2, or (maxₗ_2-minₗ_2)/2) from the left hip joint angle value (e.g., qₗ_2). In the same manner, the wearable device 600 (e.g., the processor 610) may correct the DC component of each of the sequentially obtained left hip joint angle values.

In the same manner as the DC component correction of the right hip joint angle value (e.g., qᵣ_1), the wearable device 600 (e.g., the processor 610) may correct the DC component of the right hip joint angle value (e.g., qᵣ_2), which is the subsequent value of the right hip joint angle value (e.g., qᵣ_1). The wearable device 600 (e.g., the processor 610) may obtain the right hip joint angle value (e.g., qᵣ_6) and determine the statistical value (e.g., MAᵣ_2, medianᵣ_2, or (maxᵣ_2-minᵣ_2)/2) of the right hip joint angle values (e.g., qᵣ_2, qᵣ_3, qᵣ_4, qᵣ_5, and qᵣ_6). The wearable device 600 (e.g., the processor 610) may correct the DC component of the right hip joint angle value (e.g., qᵣ_2) by subtracting the statistical value (e.g., MAᵣ_2, medianᵣ_2, or (maxᵣ_2-minᵣ_2)/2) from the right hip joint angle value (e.g., qᵣ_6). In the same manner, the wearable device 600 (e.g., the processor 610) may correct the DC component of each of the sequentially obtained right hip joint angle values.

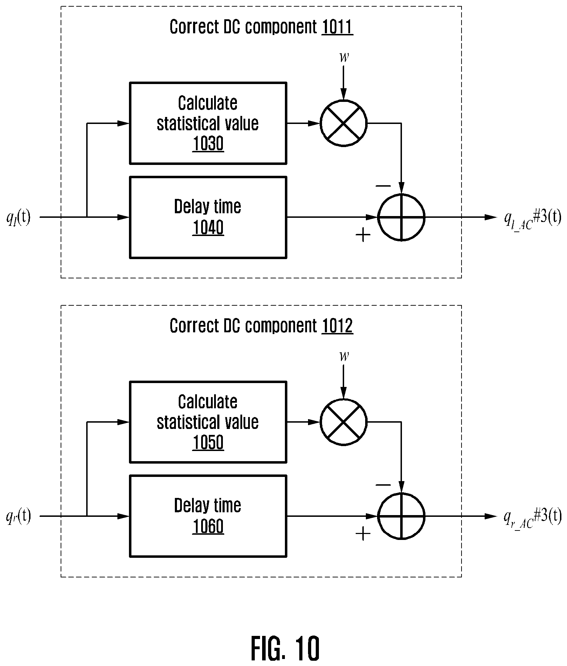

In FIG. 10, operation 1011 of FIG. 10 may be an example of operation 711 of FIG. 7 and operation 1012 of FIG. 10 may be an example of operation 712 of FIG. 7.

Referring to FIG. 10, in operation 1011, the wearable device 600 (e.g., the processor 610) may obtain the left hip joint angle (e.g., *q_{l_AC}*#3(*t*) of FIG. 10) with the DC component corrected by correcting (or removing) the DC compoment (or DC offset) of the left hip joint angle (e.g., qₗ(t)) of the user. In operation 1012, the wearable device 600 (e.g., the processor 610) may obtain the right hip joint angle (e.g., *q_{r_Ac}*#3(*t*) of FIG. 10) by correcting (or removing) the DC component (or DC offset) of the right hip joint angle (e.g., qᵣ(t)) of the user. Hereinafter, operations 1011 and 1012 are described in detail.

The descriptions of operations 911-1 and 911-2 of FIG. 9 may be applied to operations 1030 and 1040 of FIG. 10, respectively, and the descriptions of operations 912-1 and 912-2 of FIG. 9 may be applied to operations 1050 and 1060 of FIG. 10, respectively.

In the example illustrated in FIG. 10, when determining the statistical value (e.g., MAl_1, medianl_1, or (maxl_1-minl_1)/2) of the left hip joint angle values (e.g., qₗ_1, qₗ_2, qₗ_3, qₗ_4, and qₗ_5) described with reference to FIG. 9, the wearable device 600 (e.g., the processor 610) may multiply the determined statistical value by a first value (e.g., w of FIG. 10). The first value may be, for example, a value that upweights or downweights the statistical value of the left hip joint angle values (e.g., ql_1, ql_2, ql_3, ql_4, and ql_5). For upweighting, the first value may have a value (e.g., 1.4, etc.) greater than 1, and for downweighting, the first value may have a value (e.g., 0.7, etc.) less than 1. The wearable device 600 (e.g., the processor 610) may correct the DC component of the left hip joint angle value (e.g., ql_1) by subtracting the statistical value (e.g., w×MAl_1, w×medianl_1, or w×(maxl_1-minl_1)/2) multiplied by the first value from the left hip joint angle value (e.g., ql_1).

When determining the statistical value (e.g., MAᵣ_1, medianᵣ_1, or (maxᵣ_1-minᵣ_1)/2) of the right hip joint angle values (e.g., qᵣ_1, gᵣ_2, gᵣ_3, qᵣ_4, and gᵣ_5) described with reference to FIG. 9, the wearable device 600 (e.g., the processor 610) may multiply the determined statistical value by the first value (e.g., w of FIG. 10). The wearable device 600 (e.g., the processor 610) may correct the DC component of the right hip angle value (e.g., qᵣ_1) by subtracting the statistical value (e.g., w×MAᵣ_1, w×medianᵣ_1, or w×(maxᵣ_1-minᵣ_1)/2) multiplied by the first value from the right hip joint angle value (e.g., qᵣ_1).

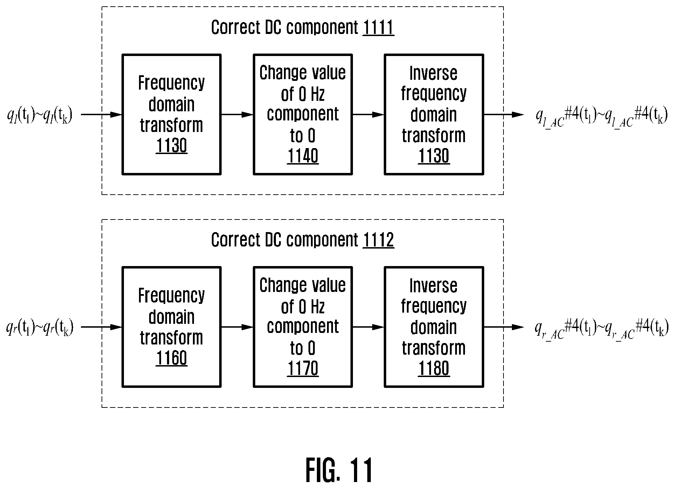

In FIG. 11, operation 1111 of FIG. 11 may be an example of operation 711 of FIG. 7 and operation 1112 of FIG. 11 may be an example of operation 712 of FIG. 7.

Referring to FIG. 11, in operation 1111, the wearable device 600 (e.g., the processor 610) may obtain the left hip joint angle (e.g., *q_{l_AC}*#4(*t*₁)~*q_{l_AC}*#4(*tₖ*) of FIG. 11) with the DC component corrected by correcting (or removing) the DC component (or DC offset) of the left hip joint angle (e.g.,*qₗ*(*t*₁)~*qₗ*(*tₖ*) of FIG. 11) of the user. In operation 1112, the wearable device 600 (e.g., the processor 610) may obtain the right hip joint angle (e.g., *q_{r_AC}*#4(*t*₁)~*q_{r_AC}*#4(*tₖ*) of FIG. 11) by correcting (or removing) the DC component (or DC offset) of the right hip joint angle ( e.g., *qᵣ*(*t*₁)~*qᵣ*(*tₖ*) of FIG. 11) of the user. Hereinafter, operations 1111 and 1112 are described in detail.

The wearable device 600 (e.g., the processor 610) may obtain the left hip joint angle values (e.g., *q_{l_}*(*t*₁)~*qₗ*(*tₖ*) of FIG. 11). In operation 1130, the wearable device 600 (e.g., the processor 610) may obtain frequency components for the left hip joint angle values by performing frequency domain transform (e.g., fast Fourier transform (FFT)) on the left hip joint angle values. Among the frequency components for the left hip joint angle values, a 0 Hz component may correspond to a DC component. In operation 1140, the wearable device 600 (e.g., the processor 610) may change the value of the 0 Hz component among the frequency components for the left hip joint angle values to 0. In operation 1150, the wearable device 600 (e.g., the processor 610) may obtain the left hip joint angle values (e.g., *q_{l_AC}*#4(*t*₁)~*q_{l_AC}*#4(*tₖ*) of FIG. 11) with a DC component corrected (or removed) by performing inverse frequency domain transform (e.g., inverse FFT (IFFT)) on the frequency components (herein, the value of the 0 Hz component is changed to 0 in operation 1140).

The wearable device 600 (e.g., the processor 610) may obtain the right hip joint angle values (e.g., *qᵣ*(*t*₁)~*qᵣ*(*tₖ*) of FIG. 11). In operation 1160, the wearable device 600 (e.g., the processor 610) may obtain frequency components for the right hip joint angle values by performing frequency domain transform (e.g., FFT) on the right hip joint angle values. Among the frequency components for the right hip joint angle values, the 0 Hz component may correspond to the DC component. In operation 1170, the wearable device 600 (e.g., the processor 610) may change the value of the 0 Hz component among the frequency components for the right hip joint angle values to 0. In operation 1180, the wearable device 600 (e.g., the processor 610) may obtain the right hip joint angle values (e.g., *q_{r_AC}*#4(*t*₁)~*q_{r_AC}*#4(*tₖ*) of FIG. 11) with a DC component corrected (or removed) by performing inverse frequency domain transform (e.g., IFFT) on the frequency components (herein, the value of the 0 Hz component is changed to 0 in operation 1170) for the right hip joint angle values.

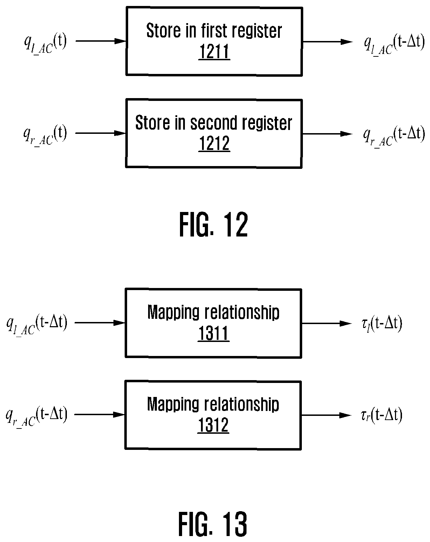

FIG. 12 is a diagram illustrating an example in which a wearable device performs a time delay, according to an embodiment.

Operation 1211 of FIG. 12 may be an example of operation 721 of FIG. 7, and operation 1212 of FIG. 12 may be an example of operation 722 of FIG. 7.

Referring to FIG. 12, in operation 1211, the wearable device 600 (e.g., the processor 610) may store a processed left hip joint angle (e.g., a left hip joint angle (*q_{l_AC}*(*t*)) with a DC component corrected) (e.g., *q_{l_AC}*#1(*t*) of FIG. 8, *g_{l_AC}*#2(*t*) of FIG. 9, *q_{l_AC}*#3(*t*) of FIG. 10, or *q_{l_AC}*#4(*t*₁) of FIG. 11) in a first register.

In operation 1212, the wearable device 600 (e.g., the processor 610) may store a right hip joint angle (e.g., a right hip joint angle (*q*_{*r*_*AC*}(*t*)) with a DC component corrected) (e.g., *q_{r_AC}*#1(*t*) of FIG. 8, *q_{r_AC}*#2(*t*) of FIG. 9, *q*_{*r*_*AC*}#3(*t*) of FIG. 10, or *q_{r_AC}*#4(*t*₁) of FIG. 11) in a second register.

The wearable device 600 (e.g., the processor 610) may obtain (or retrieve) the processed left hip joint angle (e.g., *q_{l_AC}*(*t*)) from the first register after a time of a time value (e.g., Δt) related to a torque output delay is delayed. When the time of the time value (e.g., Δt) is delayed (or elapses) after the processed left hip joint angle (e.g., *q_{l_AC}*(*t*)) is stored in the first register, the processor 610 may obtain the processed left hip joint angle (e.g., *q_{l_AC}*(*t*)) from the first register. The processed left hip joint angle obtained after a time delay may be expressed as *q_{l_AC}*(*t -* Δ*t*), for example. The length of the first register may be related to the time value (e.g., Δt) or proportional to the time value (e.g., Δt), for example.

The wearable device 600 (e.g., the processor 610) may obtain (or retrieve) the right hip joint angle (e.g., *q_{r_AC}*(*t*)) processed in the second register after the time of the time value (e.g., Δt) is delayed. When the time of the time value (e.g., Δt) is delayed (or elapses) after the processed right hip joint angle (e.g., *q_{r_AC}*(*t*)) is stored in the second register, the processor 610 may obtain the processed right hip joint angle (e.g., *q_{r_AC}*(*t*)) from the second register. The processed left hip joint angle obtained after a time delay may be expressed as *q_{r_AC}*(*t* - *Δt*)*,* for example. The length of the second register may be related to the time value (e.g., Δt) or proportional to the time value (e.g., Δt), for example.

FIGS. 13, 14, 15, 16, and 17 are diagrams illustrating examples in which a wearable device determines a torque value, according to an embodiment.

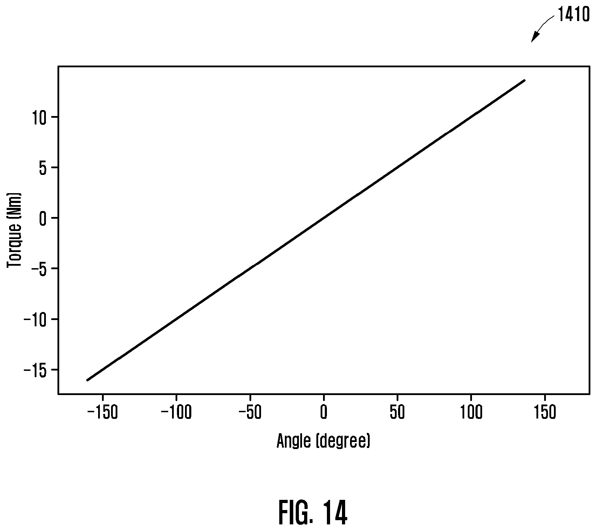

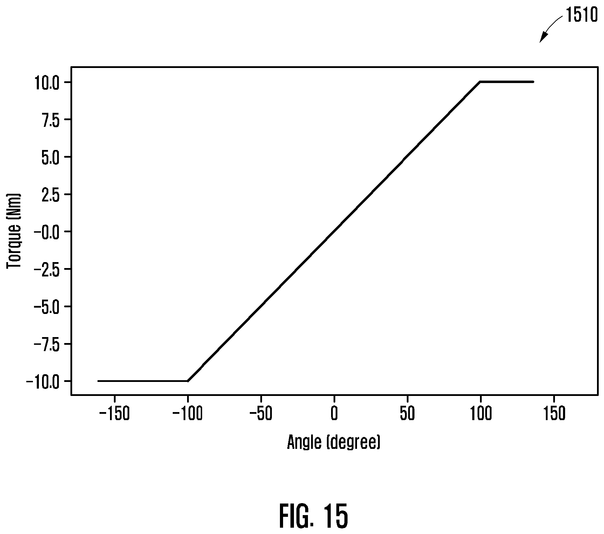

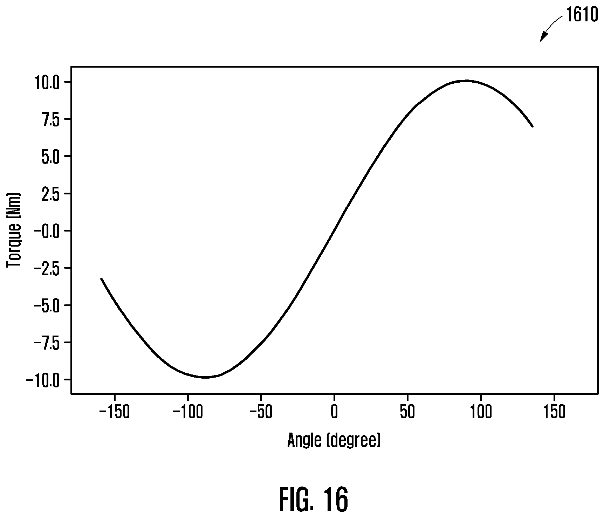

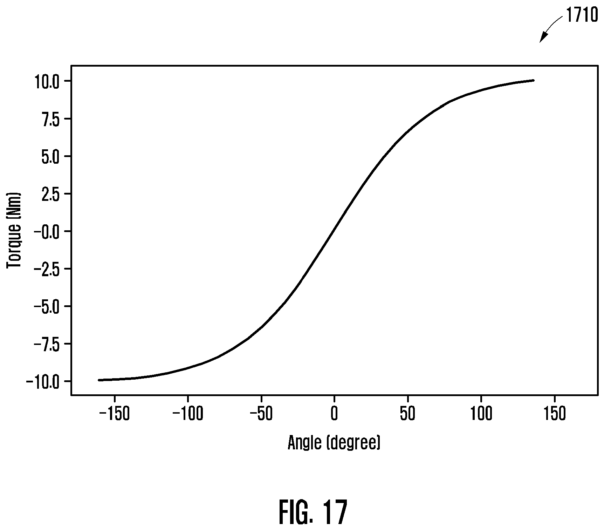

Referring to FIG. 13, the wearable device 600 (e.g., the processor 610) may obtain or determine a first torque value (e.g., τₗ(t - Δt) of FIG. 13) using a mapping relationship 1311 and a left hip joint angle (e.g., *q_{l_AC}*(*t - Δt*) of FIG. 13) obtained after a time is delayed. The wearable device 600 (e.g., the processor 610) may obtain or determine a second torque value (e.g., τᵣ(t - Δt) of FIG. 13) using a mapping relationship 1312 and a right hip joint angle (e.g., *q_{r_AC}*(*t - Δt*) of FIG. 13) obtained after the time is delayed. The mapping relationship 1311 and the mapping relationship 1312 may represent mapping between each of several hip joint angle values and each of several torque values. The mapping relationship 1311 and the mapping relationship 1312 may represent a function (e.g., a linear function to be described with reference to FIG. 14, a clipping function to be described with reference to FIG. 15, a sinusoidal function to be described with reference to FIG. 16, or a logistic function to be described with reference to FIG. 17) or a table corresponding to the function.

FIG. 14 illustrates a linear function 1410 corresponding to each example of the mapping relationship 1311 and the mapping relationship 1312. In the example shown in FIG. 14, the first torque value may be expressed by Equation 2 below and the second torque value may be expressed by Equation 3 below.${τ}_{l} \left(t-Δt\right) = κ ⋅ {q}_{l _ AC} \left(t-Δt\right)$${τ}_{r} \left(t-Δt\right) = κ ⋅ {q}_{r _ AC} \left(t-Δt\right)$

In Equations 2 and 3, κ may denote a parameter for adjusting the size of an angle value. κ may be, for example, 0.1 but is not limited thereto.

In the example shown in FIG. 14, the first torque value may be proportional to a corresponding left hip joint angle value (e.g., the left hip joint angle (e.g., q_{l_AC}(t - Δt)) obtained from the first register after a time is delayed), and the second torque value may be proportional to a right hip joint angle (e.g., q_{l_AC}(t - Δt)) obtained from a second register after a time is delayed.

In the example shown in FIG. 14, the wearable device 600 (e.g., the processor 610) may obtain a corresponding first torque value by applying a left hip joint angle value with a corrected DC component to the linear function 1410. The wearable device 600 (e.g., the processor 610) may obtain a corresponding second torque value by applying a right hip joint angle value with a DC component corrected to the linear function 1410.

FIG. 15 illustrates a clipping function 1510 corresponding to another example of each of the mapping relationship 1311 and the mapping relationship 1312. In the example shown in FIG. 15, the first torque value may be expressed by Equation 4 below and the second torque value may be expressed by Equation 5 below.${τ}_{l} \left(t-Δt\right) = \left\{\begin{matrix}\begin{matrix}κ ⋅ {q}_{max} & if {q}_{l_AC} \left(t-Δt\right) > {q}_{max} \\ κ ⋅ {q}_{min} & if {q}_{l_AC} \left(t-Δt\right) < {q}_{min}\end{matrix} \\ κ ⋅ {q}_{l_AC} \left(t-Δt\right) else\end{matrix}\right.$${τ}_{r} \left(t-Δt\right) = \left\{\begin{matrix}\begin{matrix}κ ⋅ {q}_{max} & if {q}_{r_AC} \left(t-Δt\right) > {q}_{max} \\ κ ⋅ {q}_{min} & if {q}_{r_AC} \left(t-Δt\right) < {q}_{min}\end{matrix} \\ κ ⋅ {q}_{r_AC} \left(t-Δt\right) else\end{matrix}\right.$

In Equations 4 and 5, qₘₐₓ may denote an upper limit value and qₘᵢₙ may denote a lower limit value. qₘₐₓ may be, for example, 100 degrees and qₘᵢₙ may be, for example -100 degrees. However, embodiments are not limited thereto.

In the example shown in FIG. 15, the first torque value may be proportional to a corresponding left hip joint angle value (e.g., the left hip joint angle value (e.g., q_{l_AC}(t - Δt)) obtained after a time is delayed) within a range between qₘᵢₙ and qₘₐₓ. The second torque value may be proportional to a corresponding right hip joint angle value (e.g., the right hip joint angle (e.g., q_{r_AC}(t - Δt)) obtained after a time is delayed) within a range between qₘᵢₙ and qₘₐₓ.

In the example shown in FIG. 15, the wearable device 600 (e.g., the processor 610) may obtain a corresponding first torque value by applying a left hip joint angle value with a DC component corrected to the clipping function 1510. The wearable device 600 (e.g., the processor 610) may obtain a corresponding second torque value by applying a right hip joint angle value with a DC component corrected to the clipping function 1510.

FIG. 16 illustrates a sinusoidal wave function 1610 corresponding to another example of each of the mapping relationship 1311 and the mapping relationship 1312. In the example shown in FIG. 16, the first torque value may be expressed by Equation 6 below and the second torque value may be expressed by Equation 7 below.${τ}_{l} \left(t-Δt\right) = {κ}_{sl} ⋅ sin \left({q}_{l_AC}\left(t-Δt\right)\right)$${τ}_{r} \left(t-Δt\right) = {κ}_{sl} ⋅ sin \left({q}_{r_AC}\left(t-Δt\right)\right)$

In Equations 6 and 7, κₛₗ may denote a parameter for adjusting the size of an sinusoidal wave value. κₛₗ may be, for example, 10 but is not limited thereto.

In the example shown in FIG. 17, the wearable device 600 (e.g., the processor 610) may obtain the corresponding first torque value by applying a left hip joint angle value with a DC component corrected to the sinusoidal wave function 1610. The wearable device 600 (e.g., the processor 610) may obtain a corresponding second torque value by applying a right hip joint angle value with a DC component corrected to the sinusoidal wave function 1610.

FIG. 17 illustrates a logistic function 1710 corresponding to another example of each of the mapping relationship 1311 and the mapping relationship 1312. In the example shown in FIG. 17, the first torque value may be expressed by Equation 8 below and the second torque value may be expressed by Equation 9 below.${τ}_{l} \left(t-Δt\right) = {κ}_{sl} ⋅ \frac{1 - {e}^{- ρ ⋅ {q}_{l_AC} \left(t-Δt\right)}}{1 + {e}^{- ρ ⋅ {q}_{l_AC} \left(t-Δt\right)}}$${τ}_{r} \left(t-Δt\right) = {κ}_{sl} ⋅ \frac{1 - {e}^{- ρ ⋅ {q}_{r_AC} \left(t-Δt\right)}}{1 + {e}^{- ρ ⋅ {q}_{r_AC} \left(t-Δt\right)}}$

In Equations 8 and 9 above, ρ is a parameter of the logistic function 1710. ρ may be, for example, 0.03 but is not limited thereto.

In the example shown in FIG. 17, the wearable device 600 (e.g., the processor 610) may obtain the corresponding first torque value by applying the left hip joint angle value with the DC component corrected to the logistic function 1710. The wearable device 600 (e.g., the processor 610) may obtain the corresponding second torque value by applying the right hip joint angle value with the DC component corrected to the logistic function 1710.

According to an embodiment, the wearable device 600 may determine one of the first torque value and the second torque value as a target torque value based on movement information of a user. For example, when one of a change in the left hip joint angle of the user and a change in the right hip joint angle of the user is less than a determined level and the other is greater than or equal to the determined level, the wearable device 600 may determine, as the target torque value, a torque value based on a hip joint angle having a change greater than or equal to the determined level from among the first torque value and the second torque value.

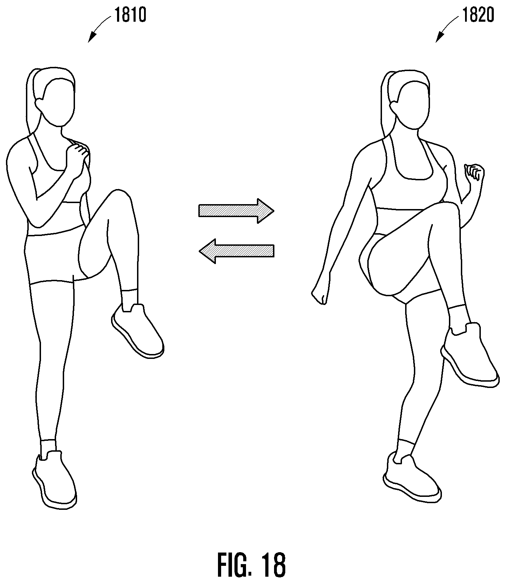

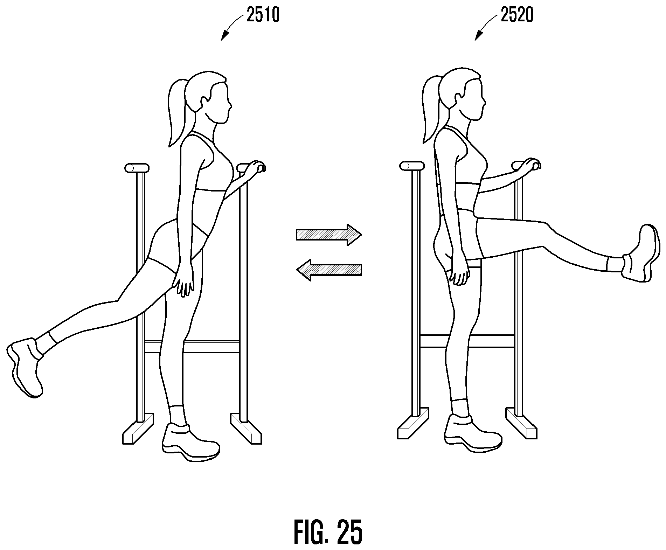

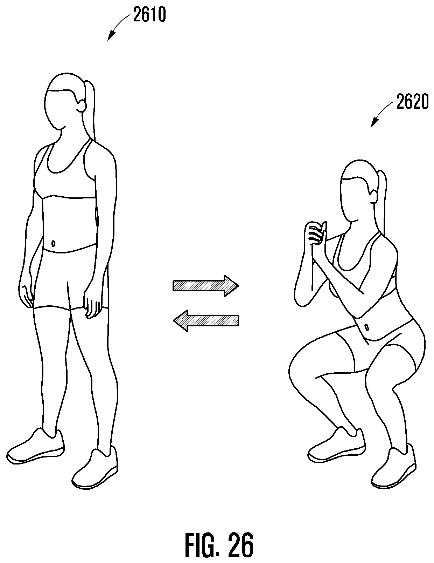

According to an embodiment, the wearable device 600 may output or provide a torque based on a target torque value to a user performing an exercise including a repetitive movement (or motion) (or an exercise including a periodic movement) (e.g., a knee-up exercise to be described below with reference to FIG. 18, a leg swing exercise to be described below with reference to FIG. 25, a squat exercise to be described below with reference to FIG. 26, a lunge exercise, etc.). For example, when determining the first torque value as the target torque value, the wearable device 600 may output or provide a torque of the first torque value to the left leg of the user and output or provide a torque of a negative value (or a torque in the opposite direction to the torque of the first torque value) of the first torque value.

FIGS. 18, 19, 20, 21, 22, 23, and 24 are diagrams illustrating examples of an operation of a wearable device for a user performing a knee-up exercise, according to an embodiment.

FIG. 18 illustrates an example of a knee-up exercise.

In the example illustrated in FIG. 18, the knee-up exercise may include, for example, a movement (or motion) 1810 in which the user lifts a first knee (e.g., the left knee) and a movement (or motion) 1820 in which the user lifts a second knee (e.g., the right knee). When the user lifts the first knee, a second foot (e.g., the right foot) of the user may touch the ground, and when the user lifts the second knee, a first foot (e.g., the left foot) of the user may touch the ground.

The knee-up exercise may correspond to an exercise including the repetition of the movement 1810 and the movement 1820.

According to an embodiment, the wearable device 600 may obtain the left hip joint angle and the right hip joint angle of the user performing the knee-up exercise. The wearable device 600 may process each of the left hip joint angle and the right hip joint angle to correct (or remove) a DC component of each of the left hip joint angle and the right hip joint angle of the user. The wearable device 600 may perform a time delay (e.g., the time delay of operation 721 of FIG. 7) on the processed left hip joint angle (e.g., the left hip joint angle with the DC component corrected) and may perform a time delay (e.g., the time delay of operation 722 of FIG. 7) on the processed right hip joint angle (e.g., the right hip joint angle with the DC component corrected).

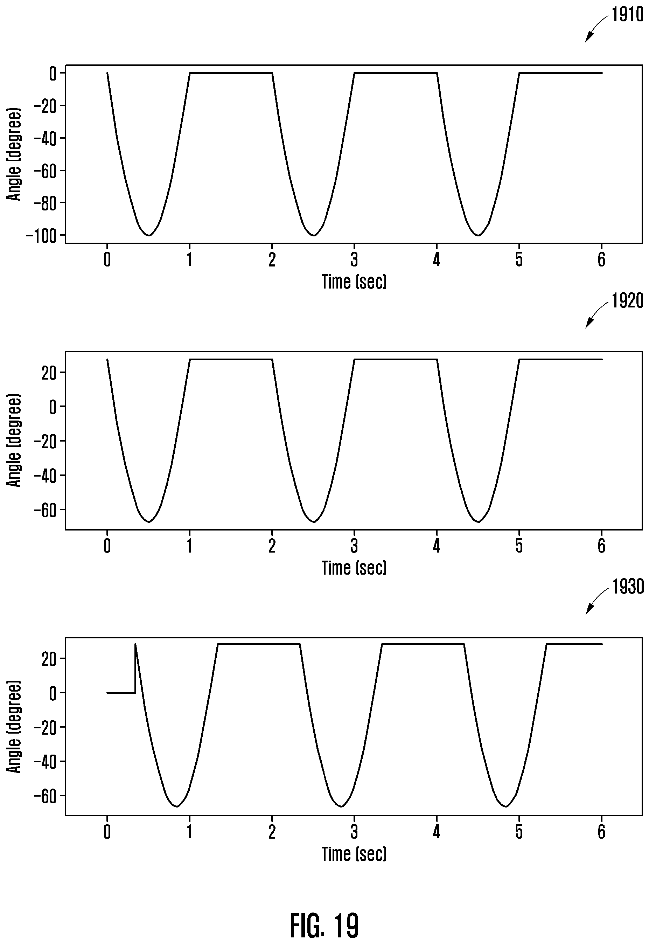

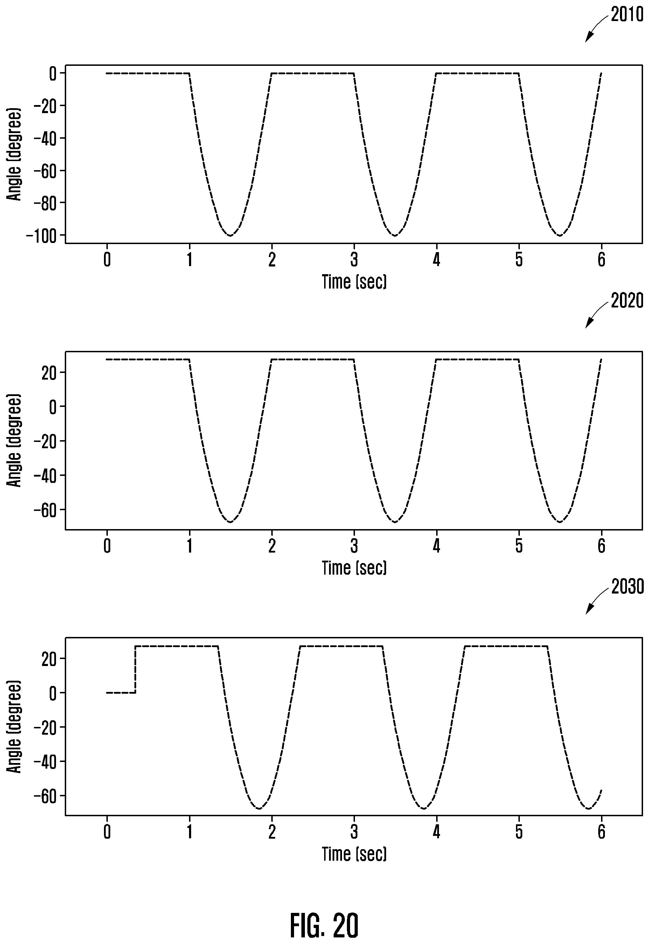

FIG. 19 illustrates a graph 1910 of the left hip joint angle of the user performing the knee-up exercise, a graph 1920 of the left hip joint angle with the DC component corrected, and a graph 1930 of the left hip joint angle obtained by performing a time delay. FIG. 20 illustrates a graph 2010 of the right hip joint angle of the user performing the knee-up exercise, a graph 2020 of the right hip joint angle with the DC component corrected, and a graph 2030 of the right hip joint angle obtained by performing a time delay.

In the example shown in FIG. 19, the wearable device 600 may correct (or remove) the DC component (or DC offset) of the left hip joint angle (e.g., the left hip joint angle corresponding to the graph 1910) of the user through operation 711 (e.g., operation 811, operation 911, operation 1011, or operation 1111). Through this correction, the wearable device 600 may obtain the left hip joint angle (e.g., the left hip joint angle with the DC component corrected corresponding to the graph 1920) with the DC component corrected. The wearable device 600 may store the left hip joint angle with the DC component corrected in a first register (e.g., the first register in operation 1211 of FIG. 12) and may obtain the left hip joint angle with the DC component corrected from the first register after a determined time (e.g., a time equivalent to a time value Δt) elapses.

In the example shown in FIG. 20, the wearable device 600 may correct (or remove) the DC component (or DC offset) of the right hip joint angle (e.g., the right hip joint angle corresponding to the graph 2010) of the user through operation 712 (e.g., operation 812, operation 912, operation 1012, or operation 1112). Through this correction, the wearable device 600 may obtain the right hip joint angle (e.g., the right hip joint angle with the DC component corrected corresponding to the graph 2020) with the DC component corrected. The wearable device 600 may store the right hip joint angle with the DC component corrected in a second register (e.g., the second register in operation 1212 of FIG. 12) and may obtain the right hip joint angle with the DC component corrected from the second register after a determined time (e.g., the time equivalent to the time value Δt) elapses.

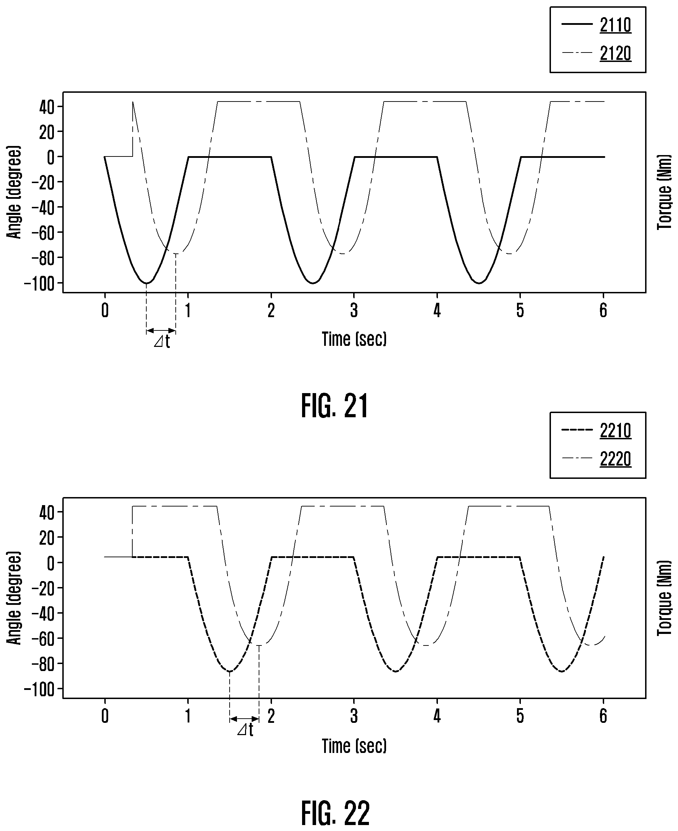

According to an embodiment, the wearable device 600 may determine the first torque value based on the processed left hip joint angle (e.g., the left hip joint angle with the DC component corrected obtained from the first register after the time equivalent to the time value Δt elapses) by performing a time delay. The wearable device 600 may determine the second torque value based on the processed right hip joint angle (e.g., the right hip joint angle with the DC component corrected obtained from the second register after the time equivalent to the time value Δt elapses) obtained by performing a time delay. FIG. 21 illustrates a graph 2120 of the first torque value, and FIG. 22 illustrates a graph 2220 of the second torque value.

According to an embodiment, in the example shown in FIG. 21, comparing the graph 2110 (e.g., the graph 1910 of FIG. 19) of the left hip joint angle of the user with the graph 2120 of the first torque value, the first torque value may be delayed by the time value Δt or more than the left hip joint angle of the user (or the left hip joint angle with the DC component corrected). The wearable device 600 may determine the first torque value corresponding to the left hip joint angle value with the DC component corrected. In this case, the wearable device 600 may delay a time equivalent to the time value Δt from the time point of obtaining the left hip joint angle value with the DC component corrected and then determine the first torque value corresponding to the left hip joint angle value with the DC component corrected. The time difference between the time point of the first torque value and the time point of a corresponding left hip joint angle value of the first torque value (e.g., the left hip joint angle value with the DC component corrected) may be based on the time value Δt.

According to an embodiment, in the example shown in FIG. 22, comparing a graph 2210 (e.g., the graph 2010 of FIG. 20) of the right hip joint angle of the user with the graph 2220 of the second torque value, the second torque value may be delayed by the time greater than or equal to the time value Δt compared to the right hip joint angle of the user (or the right hip joint angle with the DC component corrected). The wearable device 600 may determine the second torque value corresponding to the right hip joint angle value with the DC component corrected and determine the second torque value corresponding to the right hip joint angle value with the DC component corrected after delaying the time equivalent to the time value Δt from the time point of obtaining the right hip joint angle value with the DC component corrected. The time difference between the time point of the second torque value and the time point of a corresponding right hip joint angle value of the second torque value (e.g., the right hip joint angle value with the DC component corrected) may be based on the time value Δt.

According to an embodiment, the wearable device 600 may determine a target torque value from among the first torque value and the second torque value based on movement information of the user. For the knee-up exercise, the left and right knees of the user may be raised alternately. The wearable device 600 may alternately determine the first torque value and the second torque value as the target torque value for the user performing the knee-up exercise. The wearable device 600 may determine the first torque value as the target torque value when the left knee of the user goes up (or when the user performs the movement 1810) and may determine the second torque value as the target torque value when the right knee of the user goes up (or when the user performs the movement 1820).

According to an embodiment, the wearable device 600 may determine whether one of the change in the left hip joint angle of the user and the change in the right hip joint angle of the user is less than a determined level and the other is greater than or equal to the determined level. The wearable device 600 may determine, as the target torque value, a torque value based on a hip joint angle having a change greater than or equal to the determined level from among the first torque value and the second torque value.

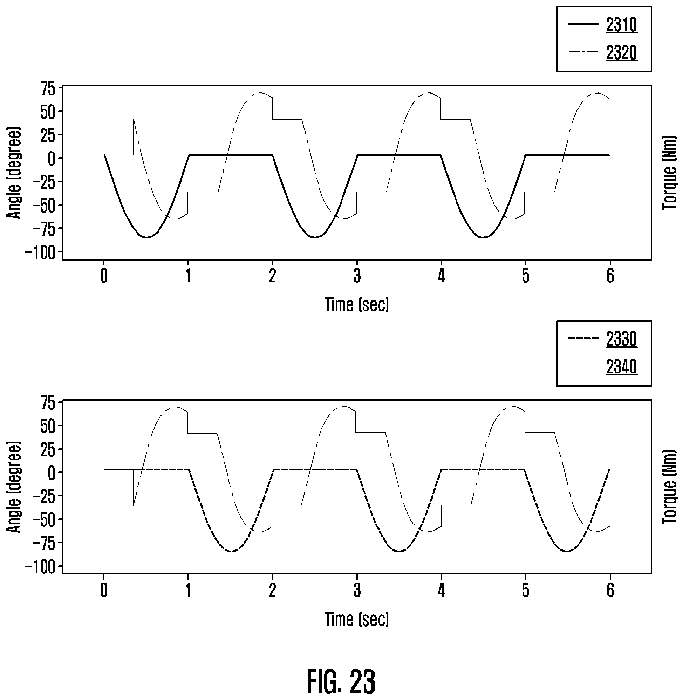

For example, FIG. 23 illustrates a graph 2310 (e.g., the graph 1910) of a left hip joint angle, a graph 2320 of a torque value used to control the first driving module 30a, a graph 2330 (e.g., the graph 2010) of a right hip joint angle, and a graph 2340 of a torque value used to control the second driving module 30b.

In the example shown in FIG. 23, the wearable device 600 may determine that the change in the left hip joint angle is greater than or equal to a determined level in a time interval between 0 and 1 second and may determine that the change in the right hip joint angle is less than the determined level. The wearable device 600 may determine a first torque value (e.g., a torque value based on the left hip joint angle having a change greater than or equal to the determined level) as the target torque value in the time interval between 0 and 1 second. In the time interval between 0 and 1 second, the wearable device 600 may output a torque of the first torque value through the driving module 630 (or the first driving module 30a) and may output a torque (or a torque in the opposite direction to the torque of the first torque value) of a negative value of the first torque value through the second driving module 30b.

The wearable device 600 may determine that the change in the left hip joint angle is less than the determined level and may determine that the change in the right hip joint angle is greater than or equal to the determined level in a time interval between 1 and 2 seconds. The wearable device 600 may determine a second torque value (e.g., a torque value based on the right hip joint angle having a change greater than or equal to the determined level) as the target torque value in the time interval between 1 and 2 seconds. In the time interval between 1 and 2 seconds, the wearable device 600 may output a torque of the second torque value through the driving module 630 (or the second driving module 30b) and may output a torque (or a torque in the opposite direction to the torque of the second torque value) of a negative value of the second torque value through the first driving module 30a.

The wearable device 600 may determine the first torque value as the target torque value in a time interval between 2 and 3 seconds, determine the second torque value as the target torque value in a time interval between 3 and 4 seconds, determine the first torque value as the target torque value in a time interval between 4 and 5 seconds, and determine the second torque value as the target torque value in a time interval between 5 and 6 seconds.

In the example shown in FIG. 23, the wearable device 600 may determine the first torque value as the target torque value in a time interval (e.g., the time interval between 0 and 1 second, the time interval between 2 and 3 seconds, and the time interval between 4 and 5 seconds) during which the left knee of the user goes up and may determine the second torque value as the target torque value in a time interval (e.g., the time interval between 1 and 2 seconds, the time interval between 3 and 4 seconds, and the time interval between 5 and 6 seconds) during which the right knee of the user goes up.

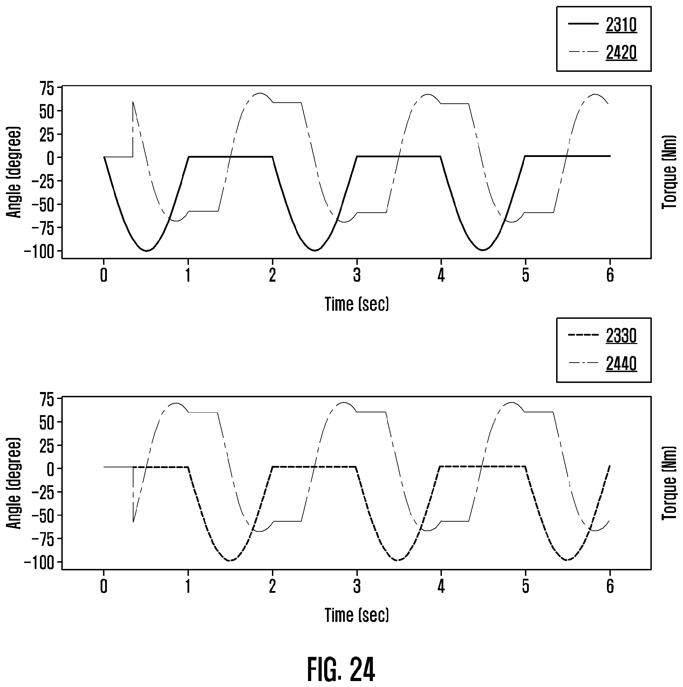

According to an embodiment, the wearable device 600 may multiply a statistical value of the left hip joint angle by the first value and then correct the DC component of the left hip joint angle in operation 1011 described with reference to FIG. 10 and may multiply a statistical value of the right hip joint angle by the first value and then correct the DC component of the right hip joint angle in operation 1012. By multiplying the statistical value of each hip joint angle by the first value, the waveform of a graph of a torque value used to control each driving module may be smoothed. FIG. 24 illustrates a graph 2420 of a torque value used to control the first driving module 30a when the statistical value of the left hip joint angle is multiplied by the first value and a graph 2440 of a torque value used to control the second driving module 30b when the statistical value of the right hip joint angle is multiplied by the first value. The waveform of the graph 2420 of FIG. 24 may be smoother than the waveform of the graph 2320 of FIG. 23, and the waveform of the graph 2440 of FIG. 24 may be smoother than the waveform of the graph 2340 of FIG. 23.

FIG. 25 is a diagram illustrating an example of an operation of a wearable device for a user performing a leg swing exercise, according to an embodiment.

FIG. 25 illustrates an example of a leg swing exercise.

In the example shown in FIG. 25, the leg swing exercise may include, for example, a movement (or motion) 2510 in which the user rotates one leg backward and a movement (or motion) 2520 in which the user rotates one leg forward. When the user swings a first leg (e.g., the left leg), a second foot (e.g., the right foot) of the user may touch the ground, and when the user swings a second leg (e.g., the right leg), a first foot (e.g., the left foot) of the user may touch the ground.

The leg swing exercise may correspond to an exercise including the repetition of the movement 2510 and the movement 2520.

According to an embodiment, the wearable device 600 may obtain the left hip joint angle and the right hip joint angle of the user performing the leg swing exercise. The wearable device 600 may process each of the left hip joint angle and the right hip joint angle to correct (or remove) a DC component of each of the left hip joint angle and the right hip joint angle of the user. The wearable device 600 may perform a time delay (e.g., the time delay of operation 721 of FIG. 7) on the processed left hip joint angle (e.g., the left hip joint angle with the DC component corrected) and may perform a time delay (e.g., the time delay of operation 722 of FIG. 7) on the processed right hip joint angle (e.g., the right hip joint angle with the DC component corrected). The wearable device 600 may determine a first torque value based on a processed left hip joint angle on which a time delay is performed and determine a second torque value based on the processed right hip joint angle on which a time delay is performed.

When the left leg of the user swings and the right leg of the user touches the ground, a change in the left hip joint angle may be greater than or equal to a determined level, and a change in the right hip joint angle may be less than the determined level. In this case, the first torque value may be based on the left hip joint angle having a change greater than or equal to the determined level. The wearable device 600 may determine the first torque value from among the first torque value and the second torque value as the target torque value. The wearable device 600 may output a torque of the first torque value to the left leg of the user through the driving module 630 (or the first driving module 30a) and output a torque in the opposite direction to the torque of the first torque value to the right leg of the user through the driving module 630 (or the second driving module 30b). When the right leg of the user swings and the left leg of the user touches the ground, the wearable device 600 may have a change in the right hip joint angle greater than or equal to a determined level and a change in the left hip joint angle less than the determined level. In this case, the second torque value may be based on the right hip joint angle having a change greater than or equal to the determined level. The wearable device 600 may determine the second torque value from among the first torque value and the second torque value as the target torque value. The wearable device 600 may output a torque of the second torque value to the right leg of the user through the driving module 630 (or the second driving module 30b) and output a torque in the opposite direction to the torque of the second torque value to the right leg of the user through the driving module 630 (or the first driving module 30a).

FIG. 26 is a diagram illustrating an example of an operation of a wearable device for a user performing a squat exercise, according to an embodiment.

FIG. 26 illustrates an example of a squat exercise.

In the example shown in FIG. 26, the squat exercise may include, for example, a movement (or motion) 2620 in which a user bends both knees and lowers the hips and a movement (or motion) 2610 in which the user straightens both bent knees. The squat exercise may correspond to an exercise including the repetition of the movement 2610 and the movement 2620.

According to an embodiment, the wearable device 600 may obtain the left hip joint angle and the right hip joint angle of the user performing the squat exercise. The wearable device 600 may process each of the left hip joint angle and the right hip joint angle to correct (or remove) a DC component of each of the left hip joint angle and the right hip joint angle of the user. The wearable device 600 may perform a time delay (e.g., the time delay of operation 721 of FIG. 7) on the processed left hip joint angle (e.g., the left hip joint angle with the DC component corrected) and may perform a time delay (e.g., the time delay of operation 722 of FIG. 7) on the processed right hip joint angle (e.g., the right hip joint angle with the DC component corrected). The wearable device 600 may determine a first torque value based on a processed left hip joint angle on which a time delay is performed and determine a second torque value based on the processed right hip joint angle on which a time delay is performed.

According to an embodiment, for the squat exercise, a change in the left hip joint angle of the user may be substantially the same as a change in the right hip joint angle of the user. In this case, the wearable device 600 may randomly determine one of the first torque value and the second torque value as the target torque value. In the example shown in FIG. 26, when determining the first torque value as the target torque value, the wearable device 600 may output the torque of the first torque value to the left leg of the user through the driving module 630 (or the first driving module 30a). In the case in which the change in the left hip joint angle is substantially the same as the change in the right hip joint angle, such as in the squat exercise, the wearable device 600 may output a torque in the same direction as the torque of the first torque value, rather than a torque in the opposite direction to the torque of the first torque value, to the right leg of the user through the driving module 630 (or the second driving module 30b). When determining the second torque value as the target torque value, the wearable device 600 may output the torque of the second torque value to the right leg of the user through the driving module 630 (or the second driving module 30b). The wearable device 600 may output the torque in the same direction as the torque of the second torque value to the left leg of the user through the driving module 630 (or the first driving module 30a).

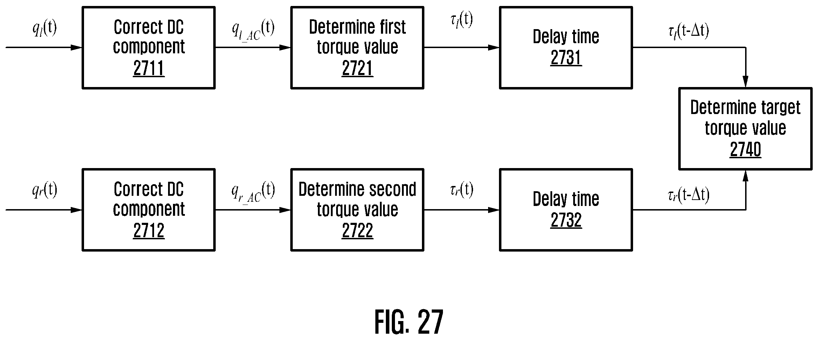

FIG. 27 is a block diagram illustrating another example of an operation of a wearable device, according to an embodiment.

In the example shown in FIG. 27, the first torque value and the second torque value are determined and then a time delay may be performed on the first torque value and the second torque value.

According to an embodiment, the wearable device 600 may correct the DC component of the left hip joint angle (e.g., qₗ(t)) of the user in operation 2711 (e.g., operation 711) and may correct the DC component of the right hip joint angle (e.g., qᵣ(t)) of the user in operation 2712 (e.g., operation 712).

According to an embodiment, in operation 2721, through a determined mapping relationship, the wearable device 600 may determine the first torque value (e.g., τₗ(t)) based on the left hip joint angle (e.g., q_{l_AC}(t)) with the DC component corrected. In operation 2722, through the determined mapping relationship, the wearable device 600 may determine the second torque value (e.g., τ*ᵣ*(t)) based on the right hip joint angle (e.g., q_{r*_*AC}(t)) with the DC component corrected.

According to an embodiment, the wearable device 600 may perform a time delay on the first torque value in operation 2731 and perform a time delay on the second torque value in operation 2732. For example, the wearable device 600 may store the first torque value in a first register and obtain the first torque value from the first register when a time equivalent to a time value Δt elapses (or is delayed). The wearable device 600 may store the second torque value in a second register and obtain the second torque value from the second register when the time equivalent to the time value Δt elapses (or is delayed). The first torque value and the second torque value obtained when the time equivalent to the time value Δt elapses may be, for example, expressed as τₗ(t - Δt) and τ*ᵣ*(t - Δt), respectively.

According to an embodiment, in operation 2740, the wearable device 600 may determine, as the target torque value, one of the first torque value and the second torque value obtained when the time equivalent to the time value Δt elapses, based on movement information of the user.

The embodiments described with reference to FIGS. 1A to 26 may apply to the embodiments of FIG. 27.

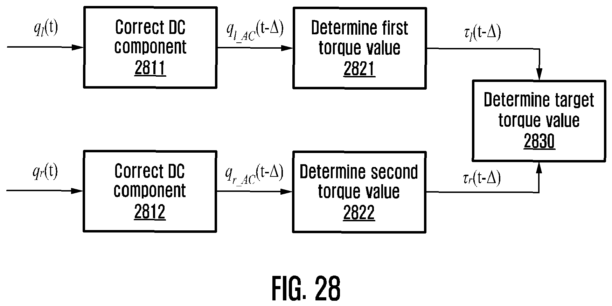

FIG. 28 is a block diagram illustrating another example of an operation of a wearable device, according to an embodiment.

In the example shown in FIG. 28, the wearable device 600 may perform a time delay in an operation of performing DC component correction.

According to an embodiment, the wearable device 600 may correct the DC component of the left hip joint angle (e.g., qₗ(t)) of the user in operation 2811. For example, the wearable device 600 may store the left hip joint angle value (e.g., qₗ_1) in a third register until the time equivalent to the time value Δ elapses in operation 911-2 of FIG. 9 or operation 1040 of FIG. 10, obtain the left hip joint angle value (e.g., qₗ_1) from the third register when a statistical value of left hip joint angle values is determined, and subtract the statistical value of the left hip joint angle values from the left hip joint angle value (e.g., qₗ_1). Accordingly, the wearable device 600 may obtain the left hip joint angle (e.g., ) with the DC component corrected, on which a time delay is performed. The wearable device 600 may correct the DC component of the right hip joint angle (e.g., qᵣ(t)) of the user in operation 2812. For example, the wearable device 600 may store the right hip joint angle value (e.g., qᵣ_1) in a fourth register until the time equivalent to the time value Δt elapses in operation 912-2 of FIG. 9 or operation 1046 of FIG. 10, obtain a right hip joint angle value (e.g., qᵣ_1) from the fourth register when a statistical value of right hip joint angle values is determined, and subtract the statistical value of the right hip joint angle values from the right hip joint angle value (e.g., qᵣ_1). Accordingly, the wearable device 600 may obtain the right hip joint angle (e.g., ) with the DC component corrected, on which a time delay is performed.

The descriptions of operations 2821, 2822, and 2830 of FIG. 28 may apply to the descriptions of operations 731, 732, and 740 of FIG. 7.

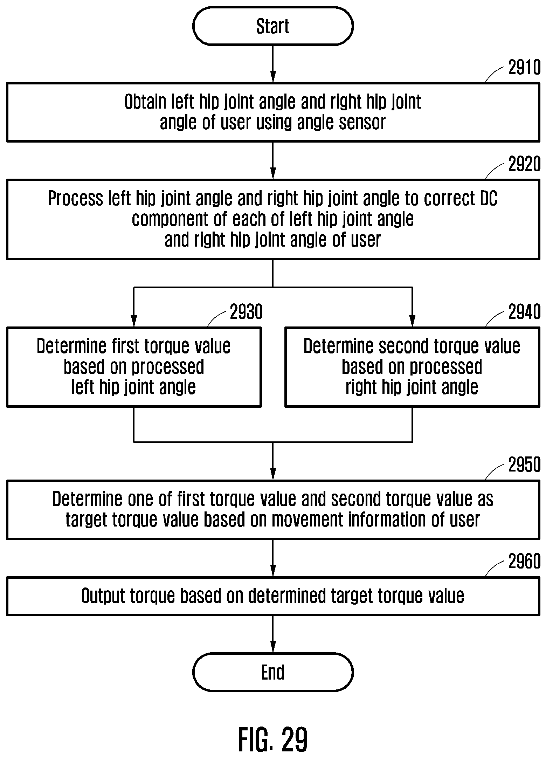

FIG. 29 is a flowchart illustrating a method of operating a wearable device, according to an embodiment.

Referring to FIG. 29, in operation 2910, the wearable device 600 may obtain the left hip joint angle and the right hip joint angle of a user using the angle sensor 620.

In operation 2920, the wearable device 600 may process the left hip joint angle and the right hip joint angle to correct a DC component of each of the left hip joint angle and the right hip joint angle of the user.

For example, in operation 2920, the wearable device 600 may perform filtering on each of the left hip joint angle and the right hip joint angle to correct the DC component of each of the left hip joint angle and the right hip joint angle.

In another example, in operation 2920, the wearable device 600 may perform frequency domain transform on angle values of the left hip joint angle and angle values of the right hip joint angle to obtain first frequency components for the angle values of the left hip joint angle and second frequency components for the angle values of the right hip joint angle. The wearable device 600 may correct a DC component of the angle values of the left hip joint angle and a DC component of the angle values of the right hip joint angle by changing the value of the component having a frequency of 0 among the first frequency components to 0 and changing the value of the component having a frequency of 0 among the second frequency components to 0.

In another example, in operation 2920, the wearable device 600 may calculate a first statistical value (e.g., a statistical value of the left hip joint angle values (qₗ_1, qₗ_2, qₗ_3, qₗ_4, and qₗ_5) described with reference to FIG. 9) of the angle values of the left hip joint angle. The wearable device 600 may correct the DC component of the first angle value by subtracting the first statistical value from the first angle value (e.g., the left hip joint angle value (qₗ_1) described with reference to FIG. 9) obtained at the earliest time point among the angle values of the left hip joint angle. The wearable device 600 may calculate a second statistical value (e.g., the statistical value of the right hip joint angle values (qᵣ_1, qᵣ_2, qᵣ_3, qᵣ_4, and qᵣ_5) described with reference to FIG. 9) of the angle values of the right hip joint angle. The wearable device 600 may correct the DC component of the second angle value by subtracting the second statistical value from the second angle value (e.g., qᵣ_1) obtained at the earliest time point among the angle values of the right hip joint angle.

In operation 2930, the wearable device 600 may determine the first torque value based on the processed left hip joint angle.

In operation 2940, the wearable device 600 may determine the first torque value based on the processed right hip joint angle.

In operation 2950, the wearable device 600 may determine one of the first torque value and the second torque value as a target torque value based on movement information of the user.

In operation 2960, the wearable device 600 may output a torque based on the determined target torque value. According to an embodiment, the torque based on the target torque value may be output with a delay. For example, when the first torque value is determined as the target torque value, the first torque (or the first torque corresponding to the first torque value) based on the first torque value may be delayed and output (or provided) to the left leg of the user, and the second torque (or the second torque in the opposite direction to the first torque) corresponding to a negative value of the first torque value may be delayed and output (or provided) to the right leg of the user. The delay of the torque (e.g., the first torque and/or the second torque) based on the target torque value may be based on a time value related to a torque output time.

The embodiments described with reference to FIGS. 1A to 28 may apply to a method of operating the wearable device 600 of FIG. 29.

According to an embodiment, a wearable device 120, 200, 300, 300-1, 600 may include a driving module 630 that outputs a torque, an angle sensor 620, and a processor 610 including a processing circuit and configured to control the driving module. The processor may obtain a left hip joint angle and a right hip joint angle of the user using the angle sensor, process the left hip joint angle and the right hip joint angle to correct a DC component of each of the left hip joint angle and the right hip joint angle, determine a first torque value based on the processed left hip joint angle, determine a second torque value based on the processed right hip joint angle, determine one of the first torque value and the second torque value as a target torque value based on movement information of the user, and control the driving module such that the torque based on the determined target torque value is output by the driving module.

According to an embodiment, the torque based on the target torque value may be output with a delay, and the delay of the torque based on the target torque value may be based on a time value related to the torque output time.

According to an embodiment, the processor may determine the first torque value based on the processed left hip joint angle and determine the second torque value based on the processed right hip joint angle after a time equivalent to a time value related to a torque output time is delayed.

According to an embodiment, the processor may store the processed left hip joint angle in a first register, obtain the processed left hip joint angle from the first register when the time is delayed, store the processed right hip joint angle in a second register, and obtain the processed right hip joint angle from the second register when the time is delayed.

According to an embodiment, each of the first register and the second register may have a length related to the time value.

According to an embodiment, the processor may determine one of the first torque value and the second torque value as the target torque value using at least one of the left hip joint angle, the right hip joint angle, a left hip joint angular velocity of the user, a right hip joint angular velocity of the user, or sensing data of an IMU sensor of the wearable device.

According to an embodiment, when one of a change in the left hip joint angle and a change in the right hip joint angle is less than a determined level and the other is greater than or equal to the determined level, the processor may determine, as the target torque value, a torque value based on a hip joint angle having a change greater than or equal to the determined level among the first torque value and the second torque value.

According to an embodiment, when determining the first target value as the target torque value, the processor may control the driving module so that a first torque corresponding to the target torque value is output to the left leg of the user and control the driving module so that a second torque in the opposite direction to the first torque is output to the right leg of the user.

According to an embodiment, the processor may perform filtering on each of the left hip joint angle and the right hip joint angle to correct the DC component of each of the left hip joint angle and the right hip joint angle.

According to an embodiment, the processor may obtain first frequency components for angle values of the left hip joint angle and second frequency components for angle values of the right hip joint value by performing frequency domain transform on the angle values of the left hip joint angle and the angle values of the right hip joint angle and correct a DC component of the angle values of the left hip joint angle and a DC component of the angle values of the right hip joint angle by changing a value of a component with a frequency of 0 to 0 among the first frequency components and changing a value of a component with a frequency of 0 to 0 among the second frequency components.

According to an embodiment, the processor may calculate a first statistical value of the angle values of the left hip joint angle, correct a DC component of a first angle value by subtracting the first statistical value from the first angle value obtained at the earliest time point among the angle values of the left hip joint angle, calculate a second statistical value of the angle values of the right hip joint angle, and correct a DC component of a second angle value by subtracting the second statistical value from the second angle value obtained at the earliest time point among the angle values of the right hip joint angle.

According to an embodiment, the first statistical value may include at least one of half of the difference between the maximum and the minimum of the angle values of the left hip joint angle, an MA value of the angle values of the left hip joint angle, or a median value of the angle values of the left hip joint angle. The second statistical value may include at least one of half of the difference between the maximum and the minimum of the angle values of the right hip joint angle, an MA value of the angle values of the right hip joint angle, or a median value of the angle values of the right hip joint angle.

According to an embodiment, the processor may apply upweighting or downweighting to each of the first statistical value and the second statistical value.

According to an embodiment, the processor may determine the first torque value mapped to the processed left hip joint angle through a determined mapping relationship and determine the second torque value mapped to the processed right hip joint angle through the determined mapping relationship.

According to an embodiment, a method of operating a wearable device may include obtaining a left hip joint angle and a right hip joint angle of a user using an angle sensor, processing the left hip joint angle and the right hip joint angle to correct a DC component of each of the left hip joint angle and the right hip joint angle, determining a first torque value based on the processed left hip joint angle, determining a second torque value based on the processed right hip joint angle, determining one of the first torque value and the second torque value as a target torque value based on movement information of the user, and outputting a torque based on the determined target torque value.

According to an embodiment, the determining of the first torque value may include determining the first torque value based on the processed left hip joint angle after a time equivalent to a time value related to the torque output time is delayed.

According to an embodiment, the determining of the second torque value may include determining the second torque value based on the processed right hip joint angle after a time equivalent to the time value is delayed.

According to an embodiment, the determining of one of the first torque value and the second torque value as the target torque value may include determining one of the first torque value and the second torque value using at least one of the left hip joint angle, the right hip joint angle, a left hip joint angular velocity of the user, a right hip joint angular velocity of the user, or sensing data of an IMU sensor of the wearable device.

According to an embodiment, the outputting of the torque may include, when it is determined that the first torque value is the target torque value, outputting a first torque corresponding to the target torque value to the left leg of the user and outputting a second torque in the opposite direction to the first torque to the right leg of the user.

According to an embodiment, the processing of the left hip joint angle and the right hip joint angle may include performing filtering on each of the left hip joint angle and the right hip joint angle to correct the DC component of each of the left hip joint angle and the right hip joint angle, obtaining first frequency components for angle values of the left hip joint angle and second frequency components for angle values of the right hip joint angle by performing frequency domain transform on the angle values of the left hip joint angle and the angle values of the right hip joint angle and correcting a DC component of the angle values of the left hip joint angle and a DC component of the angle values of the right hip joint angle by changing a value of a component with a frequency of 0 to 0 among the first frequency components and changing a value of a component with a frequency of 0 to 0 among the second frequency components, or calculating a first statistical value of the angle values of the left hip joint angle, correcting a DC component of a first angle value by subtracting the first statistical value from the first angle value obtained at the earliest time point among the angle values of the left hip joint angle, calculating a second statistical value of the angle values of the right hip joint angle, and correcting a DC component of a second angle value by subtracting the second statistical value from the second angle value obtained at the earliest time point among the angle values of the right hip joint angle.

Each embodiment herein may be used in combination with any other embodiment(s) described herein.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is singular; however, one of ordinary skill in the art will appreciate that a processing device may include multiple processing elements and multiple types of processing elements. For example, the processing device may include a plurality of processors, or a single processor and a single controller, each of which may comprise processing circuitry. In addition, different processing configurations are possible, such as parallel processors.

The software may include a computer program, a piece of code, an instruction, or one or more combinations thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, or replaced or supplemented by other components or their equivalents.

While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

Therefore, other implementations, other embodiments, and equivalents of the claims are within the scope of the following claims.

## Claims

1. A wearable device (120, 200, 300, 300-1, 600) comprising:
a driving module (630), comprising a motor and/or circuitry, configured to output a torque for a user of the wearable device;
at least one angle sensor (620); and
a processor (610), comprising processing circuitry, configured to:
obtain a left hip joint angle and a right hip joint angle of the user using the at least one angle sensor, process the left hip joint angle and the right hip joint angle to correct a direct current (DC) component of each of the left hip joint angle and the right hip joint angle, determine a first torque value based on processing of the left hip joint angle, determine a second torque value based on processing of the right hip joint angle, determine at least one of the first torque value and the second torque value as a target torque value, based on movement information of the user, and control the driving module so that a torque based on the determined target torque value is output by the driving module.

2. The wearable device of claim 1, wherein the torque based on the target torque value is output by the driving module with a delay, wherein a delay in the torque based on the target torque value is based on a time value related to a torque output time.

3. The wearable device of any one of claims 1 and 2, wherein the processor is configured to determine the first torque value based on processing of the left hip joint angle and determine the second torque value based on processing of the right hip joint angle after a time equivalent to a time value related to a torque output time is delayed.

4. The wearable device of claim 3, wherein the processor is configured to store the processed left hip joint angle in a first register, obtain the processed left hip joint angle in the first register when time is delayed, store the processed right hip joint angle in a second register, and obtain the processed right hip joint angle from the second register when time is delayed.

5. The wearable device of claim 4, wherein each of the first register and the second register has a length related to the time value.

6. The wearable device of any one of claims 1 to 5, wherein the processor is configured to determine one of the first torque value and the second torque value as the target torque value using at least one of the left hip joint angle, the right hip joint angle, a left hip joint angular velocity of the user, a right hip joint angular velocity of the user, or sensing data of an inertial measurement unit (IMU) sensor of the wearable device.

7. The wearable device of claim 6, wherein, the processor is configured to, when one of a change in the left hip joint angle and a change in the right hip joint angle is less than a level and another one of the change in the left hip joint angle and the change in the right hip joint angle is greater than or equal to the level, determine, as the target torque value, a torque value based on a hip joint angle having a change greater than or equal to the level from among the first torque value and the second torque value.

8. The wearable device of any one of claims 1 to 7, wherein, the processor is configured to, when determining the first torque value as the target torque value, control the driving module such that a first torque corresponding to the target torque value is output to a left leg of the user and control the driving module such that a second torque in an opposite direction to the first torque is output to a right leg of the user.

9. The wearable device of claim 1, wherein the processor is configured to perform filtering on each of the left hip joint angle and the right hip joint angle to correct the DC component of each of the left hip joint angle and the right hip joint angle.

10. The wearable device of one of claims 1 to 9, the processor is configured to obtain first frequency components for angle values of the left hip joint angle and second frequency components for angle values of the right hip joint value at least by performing frequency domain transform on the angle values of the left hip joint angle and the angle values of the right hip joint angle and correct a DC component of the angle values of the left hip joint angle and a DC component of the angle values of the right hip joint angle.

11. The wearable device of any one of claims 1 to 10, wherein the processor is configured to calculate a first statistical value of the angle values of the left hip joint angle, correct a DC component of a first angle value at least by subtracting the first statistical value from the first angle value obtained at an earliest time point among the angle values of the left hip joint angle, calculate a second statistical value of the angle values of the right hip joint angle, and correct a DC component of the second angle value at least by subtracting the second statistical value from the second angle value obtained at an earliest time point among the angle values of the right hip joint angle.

12. The wearable device of claim 11, wherein
the first statistical value comprises at least one of: half of a difference between a maximum and a minimum of the angle values of the left hip joint angle, a moving average value of the angle values of the left hip joint angle, or a median value of the angle values of the left hip joint angle, and
the second statistical value comprises at least one of: half of a difference between a maximum and a minimum of the angle values of the right hip joint angle, a moving average value of the angle values of the right hip joint angle, or a median value of the angle values of the right hip joint angle.

13. The wearable device of claim 11, wherein the processor is configured to apply upweighting and/or downweighting to each of the first statistical value and the second statistical value.

14. The wearable device of any one of claims 1 to 13, wherein the processor is configured to determine the first torque value mapped to the processed left hip joint angle at least through a determined mapping relationship and determine the second torque value mapped to the processed right hip joint angle at least through the determined mapping relationship.

15. A method of operating a wearable device (120, 200, 300, 300-1, 600), the method comprising:
obtaining a left hip joint angle and a right hip joint angle of a user of the wearable device, using at least one angle sensor;
processing the left hip joint angle and the right hip joint angle to correct a direct current (DC) component of each of the left hip joint angle and the right hip joint angle;
determining a first torque value based on the processed left hip joint angle;
determining a second torque value based on the processed right hip joint angle;
determining one of the first torque value and the second torque value as a target torque value, based on movement information of the user; and
outputting a torque based on the determined target torque value.
